(19) 

Europäisches Patentamt

European Patent Office

Office européen des brevets

(11) **EP 4 287 736 A1**

(12) **EUROPEAN PATENT APPLICATION**
published in accordance with Art. 153(4) EPC

(43) Date of publication:
**06.12.2023 Bulletin 2023/49**

(21) Application number: **21923990.2**

(22) Date of filing: **06.04.2021**

(51) International Patent Classification (IPC):
***H04W 72/04*** (2023.01)

(52) Cooperative Patent Classification (CPC):
**H04W 72/04**

(86) International application number:
**PCT/CN2021/085748**

(87) International publication number:
**WO 2022/165981 (11.08.2022 Gazette 2022/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.02.2021 PCT/CN2021/076004**

(71) Applicant: **Huawei Technologies Co., Ltd.**
**Shenzhen, Guangdong 518129 (CN)**

(72) Inventors:
• **YU, Yawei**
  **Shenzhen, Guangdong 518129 (CN)**
• **YU, Jian**
  **Shenzhen, Guangdong 518129 (CN)**
• **GUO, Zhiheng**
  **Shenzhen, Guangdong 518129 (CN)**
• **LU, Shaozhong**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **TRANSMISSION METHOD AND COMMUNICATION APPARATUS**

(57)    This application relates to the field of communication technologies, and provides a transmission method and a communication apparatus, which can improve data performance. The method includes: A communication device determines a target resource of a first actual repetition, where the first actual repetition is one of at least two actual repetitions included in a first nominal repetition, and a quantity of frequency domain resource units of the target resource is greater than a quantity of frequency domain resource units of the first nominal repetition. Then the communication device sends or receives the first actual repetition on the target resource.

**400**

| Terminal device | Network device |

S401: Indication information 1

S409: Capability information 2

S402: Determine, based on the indication information, a resource of at least two actual repetitions included in a nominal repetition

S403: Use, as a first actual repetition, one of the at least two actual repetitions that meets a preset condition

S404: Expand a frequency domain resource unit corresponding to the first actual repetition, to obtain a target resource of the first actual repetition

S405: First actual repetition

FIG. 4

**Description**

This application claims priority to International Patent Application No. PCT/CN2021/076004, filed with the China National Intellectual Property Administration on February 8, 2021 and entitled "TRANSMISSION METHOD AND COMMUNICATION APPARATUS", which is incorporated herein by reference in its entirety.

**TECHNICAL FIELD**

This application relates to the field of communication technologies, and in particular, to a transmission method and a communication apparatus.

**BACKGROUND**

When a propagation path loss of a radio signal is severe, a terminal device repeatedly transmits data through a physical uplink shared channel (physical uplink shared channel, PUSCH), to improve uplink transmission performance. For example, the terminal device performs data transmission of K nominal repetitions (nominal repetition) on K*L consecutive time domain resource units. L time domain resource units are occupied in each nominal repetition. In a case that a nominal repetition spans slots or encounters an unavailable time domain resource unit, the nominal repetition is segmented into at least two actual repetitions (actual repetition). A transport block size (transport block size, TBS) corresponding to a single actual repetition is the same as that corresponding to a single nominal repetition.

However, when a quantity of frequency domain resource units corresponding to the single actual repetition is the same as that corresponding to the single nominal repetition, because a quantity of time domain resource units corresponding to the single actual repetition is less than a quantity of time domain resource units corresponding to the single nominal repetition, it is easy to cause a phenomenon that a bit rate for the single actual repetition is too high, and some information bits cannot be transmitted to a network device. As a result, the network device cannot correctly perform decoding, reducing data transmission performance.

**SUMMARY**

Embodiments of this application provide a transmission method and a communication apparatus, to reduce a data transmission bit rate and improve data performance.

To achieve the foregoing objective, the following technical solutions are used in embodiments of this application.

According to a first aspect, an embodiment of this application provides a transmission method. The method may be performed by a communication device, or may be a chip applied to a communication device. The communication device may be a terminal device, or may be a network device. The following uses an example in which the method is performed by a communication device for description. The method includes: A communication device determines a target resource of a first actual repetition, where the first actual repetition is one of at least two actual repetitions included in a first nominal repetition, and a quantity of frequency domain resource units of the target resource is greater than a quantity of frequency domain resource units of the first nominal repetition. Then the communication device sends or receives the first actual repetition on the target resource. The frequency domain resource unit may be one of the following: a resource block (resource block, RB), a subcarrier, or a resource block group (resource block group, RBG).

In this way, when a single actual repetition and a single nominal repetition are corresponding to a same TBS, although a quantity of time domain resource units corresponding to the first actual repetition is less than a quantity of time domain resource units corresponding to the first nominal repetition, the quantity of frequency domain resource units of the target resource of the first actual repetition is greater than the quantity of frequency domain resource units of the first nominal repetition. Compared with a case in which "a single actual repetition and a single nominal repetition are corresponding to a same quantity of RBs", the target resource of the first actual repetition is expanded in frequency domain, so that a quantity of resources occupied by the first actual repetition increases, and more information bits can be transmitted. Therefore, a bit rate corresponding to the first actual repetition is reduced, and data transmission performance is improved.

In a possible design, the first actual repetition meets at least one of the following preset conditions.

In a first item, a quantity of time domain resource units corresponding to the first actual repetition is less than a first threshold. In other words, in the at least two actual repetitions included in the first nominal repetition, an actual repetition whose quantity of time domain resource units is less than the first threshold is the first actual repetition.

In a second item, a bit rate corresponding to the first actual repetition is greater than a second threshold. In other words, in the at least two actual repetitions included in the first nominal repetition, an actual repetition whose bit rate is greater than the second threshold is the first actual repetition.

In a possible design, the first threshold is a preset threshold of the quantity of time domain resource units. In this case, the network device does not need to indicate the first threshold to the terminal device by using first signaling, to reduce signaling overheads between communication devices. Alternatively, the first threshold is a threshold of the quantity of time domain resource units indicated by first signaling, and the first signaling is, when the communication device is a terminal device, signaling received by the terminal device from a network device, so that the network device flexibly controls the terminal device to filter actual repetitions on which frequency domain resource extension is to be performed.

In a possible design, the first threshold is $a_1$ times a quantity of time domain resource units configured for the first nominal repetition, where $a_1$ is predefined or pre-configured, and $0<a_1<1$.

In a possible design, the second threshold is a preset bit rate threshold. In this case, the network device does not need to indicate the second threshold to the terminal device by using first signaling, to reduce signaling overheads between communication devices. Alternatively, the second threshold is a bit rate threshold indicated by the second signaling. The second signaling is, when the communication device is a terminal device, signaling received by the terminal device from a network device, so that the network device flexibly controls the terminal device to filter actual repetitions on which frequency domain resource extension is to be performed.

In a possible design, the second threshold is $a_2$ times a bit rate configured for the first nominal repetition, where $a_2$ is predefined or pre-configured, and $a_2>1$.

In a possible design, the first actual repetition meets at least one of the following preset conditions.

In the first item, a quantity of time domain resource units corresponding to the first actual repetition is a minimum quantity of time domain resource units in the at least two actual repetitions. In other words, in the at least two actual repetitions included in the first nominal repetition, one actual repetition with a minimum quantity of time domain resource units is the first actual repetition.

In a second item, a bit rate corresponding to the first actual repetition is a maximum bit rate in the at least two actual repetitions. In other words, in the at least two actual repetitions included in the first nominal repetition, one actual repetition with a maximum bit rate is the first actual repetition.

In a possible design, when the communication device is a terminal device, the transmission method in the embodiment of this application further includes: The terminal device sends first capability information to a network device. The first capability information indicates a capability of the terminal device to expand the frequency domain resource unit, so that the network device obtains the capability of the terminal device. When the network device learns that the terminal device can perform an extension on the frequency domain resource unit, the network device also performs an extension on the frequency domain resource unit, to determine the target resource of the first actual repetition, so as to successfully receive or send the first actual repetition. Conversely, if the network device determines that the terminal device is not capable of expanding the frequency domain resource unit, the network device does not need to expand the frequency domain resource unit, and receives or sends the first actual repetition based on the indicated resource.

In a possible design, the quantity of frequency domain resource units of the target resource is determined based on the quantity of frequency domain resource units of the first nominal repetition and a target expansion factor. The target expansion factor indicates an adjustment proportion of the quantity of frequency domain resource units of the first nominal repetition, to implement extension of the frequency domain resource unit.

In a possible design, the quantity of frequency domain resource units of the target resource meets:

$$M = [N \times k]$$

$M$ represents the quantity of frequency domain resource units of the target resource, $N$ represents the quantity of frequency domain resource units of the first nominal repetition, $k$ represents the target expansion factor, and $[\,]$ represents a rounding operator.

In a possible design, the target expansion factor is a first expansion factor. The first expansion factor is a ratio of the quantity of time domain resource units of the first nominal repetition to the quantity of time domain resource units of the target resource. In other words, the communication device adjusts the quantity of frequency domain resource units of target resource of the actual repetition based on a time domain resource status of the first nominal repetition and of the first actual repetition.

In a possible design, the target expansion factor is a value determined based on a first expansion factor and a reference factor. The first expansion factor is a ratio of the quantity of time domain resource units of the first nominal repetition to the quantity of time domain resource units of the target resource. The reference factor includes at least one of the following.

The first item is a second expansion factor. The second expansion factor is a ratio of the quantity of time domain resource units of the first nominal repetition to a quantity of time domain resource units of a second actual repetition, and the second actual repetition belongs to the at least two actual repetitions, and is different from the first actual repetition. In other words, the quantity of frequency domain resource units of the target resource of the first actual repetition is a value determined by referring to "the time domain resource status of the first nominal repetition and of the second actual repetition".

The second item is a preset value, for example, 1. In this case, the quantity of frequency domain resource units of the target resource of the first actual repetition is a value determined by referring to the "a frequency domain resource status configured for a nominal repetition".

In a possible design, the quantity of frequency domain resource units of the target resource is a value determined based on a quantity of first frequency domain resource units and a quantity of reference frequency domain resource units. The quantity of first frequency domain resource units is determined based on the quantity of frequency domain resource units of the first nominal repetition and a first expansion factor, and the first expansion factor is a ratio of the quantity of time domain resource units of the first nominal repetition to the quantity of time domain resource units of the target resource. The quantity of reference frequency domain resource units includes at least one of the following.

The first item is a quantity of second frequency domain resource units. The quantity of second frequency domain resource units is determined by the quantity of frequency domain resource units of the second nominal repetition and a second expansion factor, and the second expansion factor is a ratio of the quantity of time domain resource units of the first nominal repetition to a quantity of time domain resource units of a second actual repetition; and the second actual repetition belongs to the at least two actual repetitions, and is different from the first actual repetition. In other words, the quantity of frequency domain resource units of the target resource of the first actual repetition is related to "the quantity of second frequency domain resource units", and is a value determined by referring to "the quantity of frequency domain resource units of the target resource of the second actual repetition".

The second item is the quantity of frequency domain resource units of the first nominal repetition. In other words, the quantity of frequency domain resource units of the target resource of the first actual repetition is related to "the quantity of frequency domain resource units of the first nominal repetition", and is a value determined by referring to "the quantity of frequency domain resource units of the first nominal repetition".

In a possible design, when the communication device is a terminal device, the transmission method in the embodiment of this application further includes: The terminal device receives third signaling from a network device. The third signaling indicates that at least two repeated transmissions perform joint channel estimation, the at least two repeated transmissions include the first actual repetition, and the two repeated transmissions have a same quantity of frequency domain resource units, so as to implement the joint channel estimation.

In a possible design, the transmission method in the embodiment of this application further includes: The terminal device sends second capability information to a network device. The second capability information indicates that the terminal device supports the joint channel estimation, so that the network device learns of a capability of the terminal device, so as to indicate the terminal device to perform repeated transmission of the joint channel estimation.

In a possible design, the quantity of time domain resource units includes a quantity of time domain resource units that carry a transport block TB and a demodulation reference signal DMRS, and the TB is data transmitted by a first repeated transmission. Alternatively, the quantity of time domain resource units includes a quantity of time domain resource units that carry the TB, but does not include a quantity of time domain resource units that carry the DMRS.

According to a second aspect, an embodiment of this application provides a communication apparatus. The communication apparatus may be the communication device in any one of the first aspect or the possible designs of the first aspect, or an apparatus disposed in the communication device above, or a chip that implements functions of the communication device above. The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

The communication apparatus includes a sending unit, a receiving unit, and a processing unit. The processing unit is configured to determine a target resource of a first actual repetition, where the first actual repetition is one of at least two actual repetitions included in a first nominal repetition, and a quantity of frequency domain resource units of the target resource is greater than a quantity of frequency domain resource units of the first nominal repetition. The sending unit is configured to send the first actual repetition on the target resource. Alternatively, the receiving unit is configured to receive the first actual repetition on the target resource.

In a possible design, the first actual repetition meets at least one of the following preset conditions.

In a first item, a quantity of time domain resource units corresponding to the first actual repetition is less than a first threshold.

In a second item, a bit rate corresponding to the first actual repetition is greater than a second threshold.

In a possible design, the first threshold is a preset threshold of the quantity of time domain resource units. Alternatively, the first threshold is a threshold of the quantity of time domain resource units indicated by first signaling, and the first signaling is, when the communication apparatus is a terminal device, signaling received by the terminal device from a network device.

In a possible design, the first threshold is $a_1$ times a quantity of time domain resource units configured for the first nominal repetition, where $a_1$ is predefined or pre-configured, and $0<a_1<1$.

In a possible design, the second threshold is a preset bit rate threshold. Alternatively, the second threshold is a bit rate threshold indicated by the second signaling. The second signaling is, when the communication apparatus is a terminal device, signaling received by the terminal device from a network device.

In a possible design, the second threshold is $a_2$ times a bit rate configured for the first nominal repetition, where $a_2$ is predefined or pre-configured, and $a_2>1$.

In a possible design, the first actual repetition meets at least one of the following preset conditions.

In the first item, a quantity of time domain resource units corresponding to the first actual repetition is a minimum quantity of time domain resource units in the at least two actual repetitions.

In a second item, a bit rate corresponding to the first actual repetition is a maximum bit rate in the at least two actual repetitions.

In a possible design, when the communication apparatus is a terminal device, the sending unit is further configured to send first capability information to a network device. The first capability information indicates a capability of the terminal device to expand the frequency domain resource unit.

In a possible design, the quantity of frequency domain resource units of the target resource is determined based on the quantity of frequency domain resource units of the first nominal repetition and a target expansion factor. The target expansion factor indicates an adjustment proportion of the quantity of frequency domain resource units of the first nominal repetition.

In a possible design, the quantity of frequency domain resource units of the target resource meets:

$$M = [N \times k]$$

M represents the quantity of frequency domain resource units of the target resource, N represents the quantity of frequency domain resource units of the first nominal repetition, k represents the target expansion factor, and [ ] represents a rounding operator.

In a possible design, the target expansion factor is a first expansion factor. The first expansion factor is a ratio of the quantity of time domain resource units of the first nominal repetition to the quantity of time domain resource units of the target resource.

In a possible design, the target expansion factor is a value determined based on a first expansion factor and a reference factor. The first expansion factor is a ratio of the quantity of time domain resource units of the first nominal repetition to the quantity of time domain resource units of the target resource. The reference factor includes at least one of the following.

The first item is a second expansion factor. The second expansion factor is a ratio of the quantity of time domain resource units of the first nominal repetition to a quantity of time domain resource units of a second actual repetition, and the second actual repetition belongs to the at least two actual repetitions, and is different from the first actual repetition.

The second item is a preset value.

In a possible design, the quantity of frequency domain resource units of the target resource is a value determined based on a quantity of first frequency domain resource units and a quantity of reference frequency domain resource units. The quantity of first frequency domain resource units is determined based on the quantity of frequency domain resource units of the first nominal repetition and a first expansion factor, and the first expansion factor is a ratio of the quantity of time domain resource units of the first nominal repetition to the quantity of time domain resource units of the target resource. The quantity of reference frequency domain resource units includes at least one of the following.

The first item is a quantity of second frequency domain resource units. The quantity of second frequency domain resource units is determined by the quantity of frequency domain resource units of the second nominal repetition and a second expansion factor, and the second expansion factor is a ratio of the quantity of time domain resource units of the first nominal repetition to a quantity of time domain resource units of a second actual repetition; and the second actual repetition belongs to the at least two actual repetitions, and is different from the first actual repetition.

The second item is the quantity of frequency domain resource units of the first nominal repetition.

In a possible design, when the communication apparatus is a terminal device, the receiving unit is further configured to receive third signaling from a network device. The third signaling indicates that at least two repeated transmissions perform joint channel estimation, the at least two repeated transmissions include the first actual repetition, and the two repeated transmissions have a same quantity of frequency domain resource units.

In a possible design, the sending unit is further configured to send second capability information to a network device. The second capability information indicates that the terminal device supports the joint channel estimation.

In a possible design, the quantity of time domain resource units includes a quantity of time domain resource units that carry a transport block TB and a demodulation reference signal DMRS, and the TB is data transmitted by a first repeated transmission. Alternatively, the quantity of time domain resource units includes a quantity of time domain resource units that carry the TB, but does not include a quantity of time domain resource units that carry the DMRS.

According to a third aspect, an embodiment of this application provides a transmission method. The method may be performed by a communication device, or may be a chip applied to a communication device. The communication device may be a terminal device, or may be a network device. The following uses an example in which the method is performed by a communication device for description. The method includes: The communication device determines a value of N1 when data is transmitted in by using a transport block over multiple slots TBoMS. N1, N2, and N meet a preset condition, where N1 is a maximum quantity of repetitions allowed when data is repeatedly transmitted by using a TBoMS, where N1≥1, and N1 is an integer, and N2 indicates a quantity of slots occupied by one transport block TB when data is transmitted by using the TBoMS, where N2≥2, N2 is an integer, N is a preset value, and N is a positive integer. The communication device performs repeated data transmission according to the value of N1.

Based on the foregoing technical solution, a maximum quantity of repetitions allowed when data is repeatedly transmitted by using a TBoMS is limited, to avoid an excessively large quantity of repetitions and reduce a signal receiving delay of a receive end.

In a possible design, the preset condition is: N1 *N2≤N.

In a possible design, N is a maximum quantity of repetitions allowed when data is repeatedly transmitted on a physical uplink shared channel PUSCH and/or a physical downlink shared channel PDSCH based on transmission of a TB over a single slot.

In a possible design, the communication device is a terminal device; and the method further includes: The terminal device receives a first message from a network device, where the first message indicates the terminal device to transmit data by using a TBoMS. The terminal device receives a second message from the network device, where the second message is used to notify the terminal device of a value of N2. Based on this design, the network device directly indicates, by using two separate messages, the terminal device to transmit the data by using the TBoMS and the value of N2.

In a possible design, the communication device is a terminal device; and the method further includes: The terminal device receives a third message from a network device, where the third message includes the value of N2. The terminal device determines, based on the value of N2, to transmit data by using a TBoMS. Based on this design, the network device sends a message to the terminal device, where the message includes the value of N2, to indirectly indicate the terminal device to transmit the data by using the TBoMS.

In a possible design, that the terminal device determines a value of N1 includes: The terminal device determines the value of N1 based on the value of N2 and the value of N, where N1 meets: N1=N/N2. Based on this design, the terminal device may calculate the value of N1 by itself.

In a possible design, before the terminal device determines the value of N1 based on the value of N2 and the value of N, the method further includes: The terminal device determines the value of N.

In a possible design, that the terminal device determines a value of N1 includes: The terminal device receives a fourth message from a network device, where the fourth message indicates the value of N1. Based on this design, the network device may directly indicate to the terminal device a value of N1.

In a possible design, the communication device is a network device; and the method further includes: The network device sends a first message to a terminal device, where the first message indicates the terminal device to transmit data by using a TBoMS. The network device sends a second message to the terminal device, where the second message is used to notify the terminal device of a value of N2. Based on this design, the network device directly indicates, by using two separate messages, the terminal device to transmit the data by using the TBoMS and the value of N2.

In a possible design, the communication device is a network device; and the method further includes: The network device sends a third message to the terminal device, where the third message includes the value of N2. The value of N2 indicates that the terminal device transmits data by using the TBoMS. Based on this design, the network device sends a message to the terminal device, where the message includes the value of N2, to indirectly indicate the terminal device to transmit the data by using the TBoMS.

In a possible design, that the network device determines the value of N1 includes: The network device determines the value of N1 based on the value of N2 and the value of N, where N1 meets: N1=N/N2.

In a possible design, after the network device determines the value of N1 based on the value of N2 and the value of N, the method further includes: The network device sends a fourth message to the terminal device, where the fourth message indicates the value of N1. Based on this design, the network device may directly indicate to the terminal device a value of N1.

According to a fourth aspect, an embodiment of this application provides a transmission method, and the method includes: The terminal device determines a threshold, and the terminal device multiplexes uplink control information UCI on a physical uplink shared channel PUSCH based on the threshold. The PUSCH occupies a plurality of slots, and a quantity of slots over which the terminal device multiplexes the UCI is greater than or equal to 2 and less than or equal to the threshold.

Based on the foregoing technical solution, the terminal device performs UCI multiplexing on the PUSCH that occupies a plurality of slots, and a quantity of slots for UCI multiplexing is greater than or equal to 2 and less than or equal to the threshold, thereby reducing a delay of UCI demodulation and decoding.

In a possible design, the threshold is a preset value, or the threshold is indicated by the network device.

In a possible design, the threshold is 4.

According to a fifth aspect, an embodiment of this application provides a communication apparatus. The communication apparatus may be the communication device in any one of the third aspect or the possible designs of the third aspect, or may be an apparatus disposed in the communication device above, or a chip that implements functions of the communication device above. The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

The communication apparatus includes a processing unit. The processing unit is configured to determine a value of N1 when data is transmitted by using a transport block over multiple slots TBoMS. N1, N2, and N meet a preset condition, where N1 is a maximum quantity of repetitions allowed when data is repeatedly transmitted by using a TBoMS, where $N1 \geq 1$, and N1 is an integer, and N2 indicates a quantity of slots occupied by one transport block TB when data is transmitted by using the TBoMS, where $N2 \geq 2$, N is an integer, N is a preset value, and N is a positive integer. The processing unit is further configured to perform a repeated transmission of the data based on the value of N1.

In a possible design, the preset condition is: $N1 *N2 \leq N$.

In a possible design, N is a maximum quantity of repetitions allowed when data is repeatedly transmitted on a physical uplink shared channel PUSCH and/or a physical downlink shared channel PDSCH based on transmission of a TB over a single slot.

In a possible design, the communication apparatus is a terminal device; and the communication apparatus further includes a receiving unit, where the receiving unit is configured to receive a first message from a network device, where the first message indicates the terminal device to transmit data by using a TBoMS. The receiving unit is further configured to receive a second message from the network device, where the second message is used to notify the terminal device of a value of N2.

In a possible design, the communication apparatus is a terminal device; and the communication apparatus further includes a receiving unit, where the receiving unit is configured to receive a third message from a network device, where the third message includes the value of N2. The processing unit is further configured to determine, based on the value of N2, to use the TBoMS to transmit the data.

In a possible design, the processing unit is specifically configured to determine the value of N1 based on the value of N2 and the value of N, where N1 meets: N1=N/N2.

In a possible design, the processing unit is further configured to determine a value of N.

In a possible design, the receiving unit is further configured to receive a fourth message from a network device, and the fourth message indicates the value of N1.

In a possible design, the communication apparatus is a network device; and the communication apparatus further includes a sending unit, where the sending unit is configured to send a first message to a terminal device, where the first message indicates the terminal device to transmit data by using a TBoMS. The sending unit is further configured to send a second message to the terminal device, where the second message is used to notify the terminal device of the value of N2.

In a possible design, the communication apparatus is a network device; and the communication apparatus further includes a sending unit, where the sending unit is configured to send a third message to a terminal device, where the third message includes the value of N2. The value of N2 indicates that the terminal device transmits data by using the TBoMS.

In a possible design, the processing unit is specifically configured to determine the value of N1 based on the value of N2 and the value of N, where N1 meets: N1=N/N2.

In a possible design, the sending unit is further configured to send a fourth message to a terminal device, and the fourth message indicates the value of N1.

According to a sixth aspect, an embodiment of this application provides a communication apparatus. The communication apparatus may be the terminal device in any one of the fourth aspect or the possible designs of the fourth aspect, or may be an apparatus disposed in the terminal device above, or a chip that implements functions of the terminal device above. The communication apparatus includes a corresponding module, unit, or means (means) for implementing the foregoing method. The module, unit, or means may be implemented by hardware, software, or hardware executing corresponding software. The hardware or software includes one or more modules or units corresponding to the foregoing functions.

The communication apparatus includes a processing unit, where the processing unit is configured to determine a threshold. The processing unit is further configured to multiplex uplink control information UCI on a physical uplink shared channel PUSCH based on the threshold. The PUSCH occupies a plurality of slots, and a quantity of slots over which the processing unit multiplexes the UCI is greater than or equal to 2 and less than or equal to the threshold.

In a possible design, the threshold is a preset value. Alternatively, the threshold is indicated by a network device.

In a possible design, the threshold is 4.

According to a seventh aspect, an embodiment of this application provides a communication apparatus, including: a processor and a memory, where the memory is configured to store computer instructions. When the processor executes the instructions, the communication apparatus is enabled to perform the method in any one of the foregoing aspects or any one of the possible designs of the foregoing aspects. For example, the communication apparatus may be the communication device in any one of the first aspect or the possible designs of the first aspect, or a chip that implements a function of the communication device above. Alternatively, the communication apparatus may be the communication device in any one of the third aspect or the possible designs of the third aspect, or a chip that implements a function of the communication device above. Alternatively, the communication apparatus may be the terminal device in any one of the fourth aspect or the possible designs of the fourth aspect, or a chip that implements a function of the terminal device above.

According to an eighth aspect, an embodiment of this application provides a communication apparatus, including: processor, where the processor is coupled to a memory, and is configured to read and execute instructions in the memory, so that the communication apparatus performs the method in any one of the foregoing aspects or any one of the possible designs of the foregoing aspects. For example, the communication apparatus may be the communication device in any one of the first aspect or the possible designs of the first aspect, or a chip that implements a function of the communication device above. Alternatively, the communication apparatus may be the communication device in any one of the third aspect or the possible designs of the third aspect, or a chip that implements a function of the communication device above. Alternatively, the communication apparatus may be the terminal device in any one of the fourth aspect or the possible designs of the fourth aspect, or a chip that implements a function of the terminal device above.

According to a ninth aspect, an embodiment of this application provides a chip, including a logic circuit and an input/output interface. The input/output interface is configured to communicate with a module other than the chip. For example, the chip may be a chip that implements a function of the communication device in any one of the first aspect or the possible designs of the first aspect. The input/output interface inputs or outputs a first actual repetition. Alternatively, the chip may be a chip that implements a function of the communication device in any one of the third aspect or the possible designs of the third aspect, or the chip may be a chip that implements a function of the terminal device in any one of the fourth aspect or the possible designs of the fourth aspect. The logic circuit is configured to run a computer program or instructions, to implement the method in any one of the first aspect or the possible designs of the first aspect; or implement the method in any one of the third aspect or the possible designs of the third aspect; or implement the method in any one of the fourth aspect or the possible designs of the fourth aspect.

According to a tenth aspect, an embodiment of this application provides a computer-readable storage medium. The computer-readable storage medium stores instructions; and when the instructions are run on a computer, the computer is enabled to perform the transmission method in any one of the foregoing aspects.

According to an eleventh aspect, an embodiment of this application provides a computer program product including instructions. When the computer program product runs on a computer, the computer is enabled to perform the transmission method according to any one of the foregoing aspects.

According to a twelfth aspect, an embodiment of this application provides a circuit system, where the circuit system includes a processing circuit, and the processing circuit is configured to perform the transmission method according to any one of the foregoing aspects.

According to a thirteenth aspect, an embodiment of this application provides a communication system, where the communication system includes at least two communication devices in any one of the foregoing aspects. The at least two communication devices include a terminal device and a network device.

For technical effects brought by any design of the second aspect, or the fifth aspect to the ninth aspect, refer to beneficial effects in the corresponding method provided above. Details are not described herein again.

**BRIEF DESCRIPTION OF DRAWINGS**

FIG. 1a is a schematic diagram of resource distribution for a repeated transmission according to an embodiment of this application;

FIG. 1b is a schematic diagram of resource distribution for still another repeated transmission according to an embodiment of this application;

FIG. 1c is a schematic diagram of resource distribution for yet another repeated transmission according to an embodiment of this application;

FIG. 2 is a schematic diagram of a structure of a virtual circular cache according to an embodiment of this application;

FIG. 3 is a schematic diagram of a network architecture according to an embodiment of this application;
FIG. 4 is a schematic flowchart of a transmission method according to an embodiment of this application;
FIG. 5 is a schematic diagram of resource distribution of still another transmission according to an embodiment of this application;
FIG. 6 is a schematic flowchart of still another transmission method according to an embodiment of this application;
FIG. 7 is a schematic flowchart of yet another transmission method according to an embodiment of this application;
FIG. 8a is a schematic diagram of transmitting data by using a TBoMS according to an embodiment of this application;
FIG. 8b is a schematic diagram of transmitting a TB based on a single slot according to an embodiment of this application;
FIG. 8c is a schematic diagram of a repeated data transmission according to an embodiment of this application;
FIG. 9 is a schematic flowchart of yet another transmission method according to an embodiment of this application;
FIG. 10 is a schematic diagram of UCI multiplexing in the current technology;
FIG. 11 is a schematic diagram of yet another UCI multiplexing in the current technology;
FIG. 12 is a schematic flowchart of yet another transmission method according to an embodiment of this application;
FIG. 13 is a schematic diagram of UCI multiplexing according to an embodiment of this application;
FIG. 14 is a schematic diagram of yet another UCI multiplexing according to an embodiment of this application;
FIG. 15 is a schematic diagram of yet another UCI multiplexing according to an embodiment of this application;
FIG. 16 is a schematic diagram of yet another UCI multiplexing according to an embodiment of this application;
FIG. 17 is a schematic diagram of a structure of a communication apparatus according to an embodiment of this application; and
FIG. 18 is a schematic diagram of a structure of still another communication apparatus according to an embodiment of this application.

## DESCRIPTION OF EMBODIMENTS

In the specification and accompanying drawings of this application, the terms "first", "second", and the like are intended to distinguish between different objects or distinguish between different processing of a same object, but do not indicate a particular order of the objects. Moreover, the terms "comprising/including" and "having" and any variations thereof in the description of this application are intended to cover non-exclusive inclusions. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" or the like is used to represent giving an example, an illustration, or a description. Any embodiment or design solution described as "example" or "for example" in embodiments of this application should not be interpreted as being more preferred or advantageous than another embodiment or design solution. Exactly, use of the word "example", "for example", or the like is intended to present a related concept in a specific manner. The term "a plurality of" mentioned in the description of this application refers to two or more.

First, technical terms in embodiments of this application are described.

1. Repeated transmission

In a deep coverage scenario (such as a cell edge or a basement), the propagation path loss of a radio signal is severe. A terminal device performs a repeated transmission to improve coverage performance of a radio signal. For example, the terminal device repeatedly transmits uplink data through a physical uplink shared channel (physical uplink shared channel, PUSCH). Correspondingly, a network device repeatedly receives the uplink data carried on the PUSCH, and combines the repeatedly received uplink data, to improve channel estimation accuracy and data demodulation performance, thereby improving uplink transmission performance. In R16 of 5G new radio (new radio, NR), a maximum quantity of times that the terminal device repeatedly transmits uplink data through a PUSCH is 16. The PUSCH supports two types of repeated transmission: type A (Type) and type B. In embodiments of this application, a "PUSCH repetition type B (repetition type B)" is used as an example for description.

2. Nominal repetition (nominal repetition)

A nominal repetition refers to a nominal repetition of transmission in the foregoing repetition transmission mechanism.

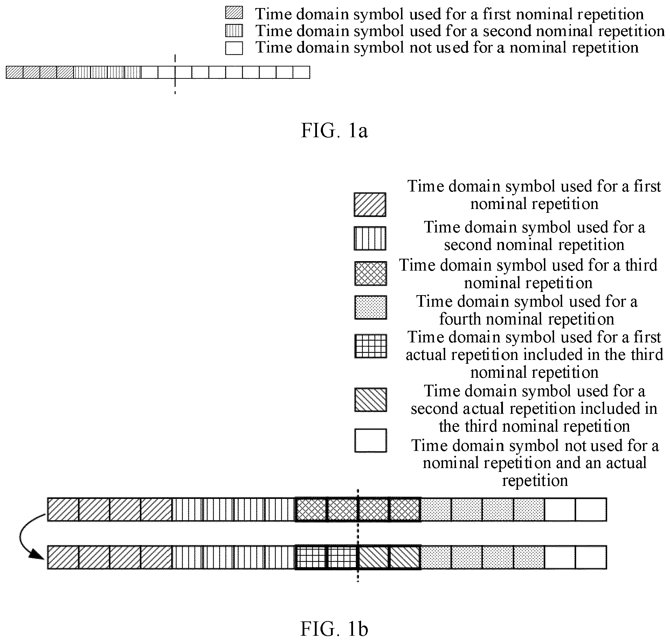

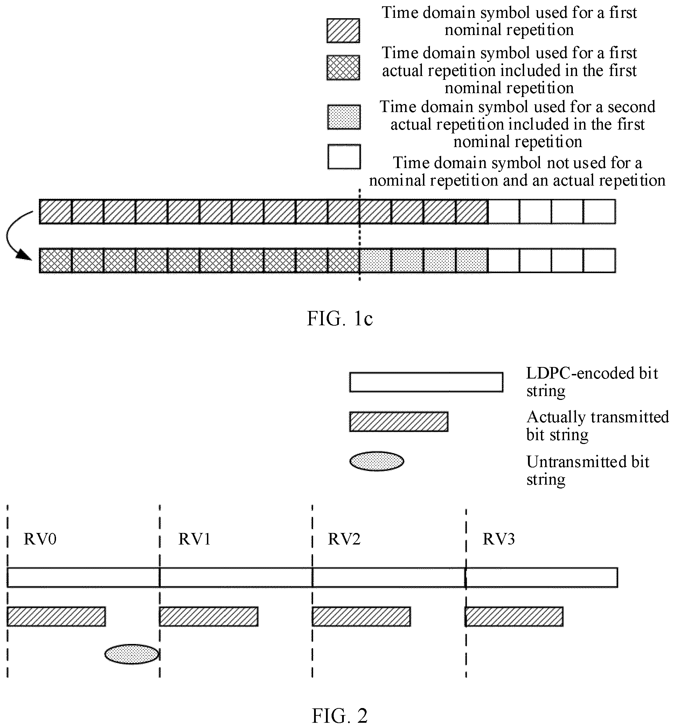

For example, an uplink transmission is used as an example. The terminal device performs data transmission of K nominal repetitions on K*L consecutive time domain resource units. A start time domain resource unit of the first nominal repetition is an $S^{th}$ time domain resource unit in the current slot, and L time domain resource units are occupied in each nominal repetition. During implementation, the time domain resource unit may be a time domain symbol. For example, in FIG. 1a, FIG. 1b, and FIG. 1c, that the time domain resource unit is a time domain symbol is used as an example, one grid represents one time domain symbol, and a dotted line represents a slot boundary (slot boundary). For example, when S=5, K=2, and L=4, a resource configuration for two nominal repetition transmissions is shown in FIG. 1a. A time domain resource for the two nominal repetition transmissions is a fifth time domain symbol to a twelfth time domain symbol in a current slot. For another example, when S=5, K=4, and L=4, a resource configuration for four nominal repetition transmissions is shown in FIG. 1b. A time domain resource for the four nominal repetition transmissions is a fifth time domain symbol to a fourteenth time domain symbol in a current slot, and first six time domain symbols in a next slot in the current slot. For another example, when S=5, K=1, and L=14, a resource configuration for one nominal repetition transmission is shown in FIG. 1c. A time domain resource for the one nominal repetition transmission is a fifth time domain symbol to a fourteenth time domain symbol in a current slot, and first four time domain symbols in a next slot in the current slot.

3. Actual repetition (actual repetition)

When a nominal repetition encounters a slot boundary or an unavailable time domain resource unit, the nominal repetition is segmented into two or more segments. One segment may be referred to as one "actual repetition". For example, in a case of uplink transmission, the unavailable time domain resource unit includes a downlink time domain resource unit, for example, a downlink time domain symbol.

For example, still uplink transmission is used as an example. The terminal device performs data transmission of K nominal repetitions on K*L consecutive time domain resource units. If the K*L time domain resource units do not encounter a slot boundary and an unavailable time domain resource unit, no segmented nominal repetition exists in the K nominal repetitions. As shown in FIG. 1a, when S=5, K=2, and L=4, no slot boundary is encountered in the two nominal repetition transmissions, no unavailable time domain symbol is encountered, and a phenomenon of "a nominal repetition is segmented" does not exist. Conversely, if the K*L time domain resource units encounter a slot boundary and/or an unavailable time domain resource unit, at least one of the K nominal repetitions is segmented. For example, referring to FIG. 1b, when S=5, K=4, and L=4, a time domain resource (shown by a thick solid line grid in FIG. 1b) of the third nominal repetition in the four nominal repetitions crosses a slot and is segmented into two actual repetitions. That is, the third nominal repetition contains two actual repetitions. For another example, referring to FIG. 1c, when S=5, K=1, and L=14, a time domain resource (shown by a thick solid line grid in FIG. 1c) for the first repetition transmission crosses a slot and is segmented into two actual repetitions. That is, the first nominal repetition contains two actual repetitions.

In addition, for a plurality of actual repetitions segmented from a same nominal repetition, a quantity of frequency domain resource units corresponding to each actual repetition is the same. The frequency domain resource unit may be one of the following: a resource block (resource block, RB), a subcarrier, or a resource block group (resource block group, RBG). In a case of uplink transmission, repeated transmission is performed through a PUSCH. The following describes a frequency domain resource configuration of the PUSCH by using an example in which the frequency domain resource unit is an RB.

Example 1: Consecutive frequency domain resource configuration

When a type (Type) 1 is used for frequency domain resource configuration in NR, a frequency domain resource of the PUSCH is a plurality of consecutive RBs. For example, a network device sends downlink control information (downlink control information, DCI) to a terminal device. Correspondingly, the terminal device receives the DCI from the network device. A value corresponding to a preset quantity of bits in a frequency domain resource configuration field of the DCI is a resource indication value (resource indication value, RIV). The terminal device determines frequency domain resource information of the PUSCH based on the RIV The frequency domain resource information of the PUSCH includes: start RB code $RB_{start}$ and the length of consecutive RBs $L_{RBs}$. A quantity of bits that are in the frequency domain resource configuration field of the DCI and that indicate the RIV meets the following formula:

$$K = \left\lceil log_2\left(N_{bwp}^{size}\left(N_{bwp}^{size} + 1\right)/2\right)\right\rceil \qquad \text{Formula (1)}$$

K represents a quantity of bits that are in the frequency domain resource configuration field of the DCI and that indicate the RIV, and $N_{bwp}^{size}$ represents a quantity of RBs in one bandwidth part (bandwidth part, BWP).

Example 2: Discrete frequency domain resource configuration

When a type (Type) 0 is used for frequency domain resource configuration in NR, a frequency domain resource of the PUSCH is a plurality of inconsecutive RBs. For example, a network device sends DCI to a terminal device. Correspondingly, the terminal device receives the DCI from the network device. A frequency domain resource configuration field of the DCI carries a bitmap. The bitmap indicates a frequency domain resource occupied by the PUSCH. For example, the bitmap indicates a resource block group (resource block group, RBG) used to carry a PUSCH. A quantity of RBs included in one RBG is related to a bandwidth of a current BWP. For example, when the bandwidth of the BWP is relatively large, a quantity of RBs included in one RBG is relatively large. Conversely, when the bandwidth of the BWP is relatively small, a quantity of RBs included in one RBG is relatively small. When the DCI uses a bitmap to indicate the RBG used to carry the PUSCH, transmission resource overheads are low. A quantity of RBs in one RBG may be described as a "nominal RBG size (RBG size)". A correspondence between "BWP bandwidth" and "a quantity of RBs in one RBG" is shown in Table 1.

**Table 1**

| BWP bandwidth | RBG configuration 1 | RBG configuration 2 |
|---------------|--------------------|--------------------|
| 1-36 | 2 | 4 |
| 37-72 | 4 | 8 |
| 73-144 | 8 | 16 |
| 145-275 | 16 | 16 |

In the foregoing Table 1, the RBG configuration 1 and the RBG configuration 2 are information configured by a network device for a terminal device by using higher layer signaling (for example, radio resource control (radio resource control, RRC) signaling). Referring to Table 1, in a case of the RBG configuration 1, if the bandwidth of the BWP is between one RB and 36 RBs, the nominal RBG size is 2. If the bandwidth of the BWP is between 37 RBs and 72 RBs, the nominal RBG size is 4. If the bandwidth of the BWP is between 73 RBs and 144 RBs, the nominal RBG size is 8. If the bandwidth of the BWP is between 145 RBs and 275 RBs, the nominal RBG size is 16. In a case of the RBG configuration 2, if the bandwidth of the BWP is between one RB and 36 RBs, the nominal RBG size is 4. If the bandwidth of the BWP is between 37 RBs and 72 RBs, the nominal RBG size is 8. If the bandwidth of the BWP is between 73 RBs and 275 RBs, the nominal RBG size is 16.

In the foregoing repeated transmission mechanism, the network device indicates, by using one scheduling, the frequency domain resource carrying the PUSCH. A manner of scheduling the PUSCH frequency domain resource for the terminal device may be a Type 1 manner, or may be a Type 0 manner. This is not limited in embodiments of this application. In this way, the terminal device performs multiple times of repeated transmission based on a same frequency domain resource configuration. In other words, in the repetition transmission mechanism, a quantity of frequency domain resource units corresponding to a plurality of nominal repetitions is the same.

In conclusion, it can be learned that, when a quantity of frequency domain resource units corresponding to a single actual repetition is the same as that corresponding to a single nominal repetition, because a quantity of time domain resource units corresponding to a single actual repetition is less than a quantity of time domain resource units corresponding to a single nominal repetition, and a transport block size (transport block size, TBS) in the single actual repetition is the same as that in the single nominal repetition, a bit rate for the single actual repetition is easily too high, and some information bits cannot be transmitted. As a result, the network device cannot correctly perform decoding, and data transmission performance is reduced.

For example, referring to FIG. 2, when a start position of a transmitted bit string is determined based on a value of a redundancy version (redundancy version, RV), that channel coding is achieved by using low-density parity-check (low-density parity-check, LDPC) is used as an example, an LDPC-encoded bit string is buffered in a virtual circular buffer (virtual circular buffer). When the network device fails to perform decoding, the network device saves the received bit string, and requires the terminal device to repeatedly transmit the bit string. The network device combines the received repeatedly transmitted bit string with the previously received bit string, and then decodes the combined bit string. For each repeated transmission, the terminal device determines, based on a current RV value, a start position of a to-be-transmitted bit string in a virtual circular buffer (on the terminal device side), sequentially reads an LDPC-encoded bit string of a specific length, and repeatedly transmits the read bit string to the network device. The network device determines, based on the current RV value, a start position of the received bit string in the virtual circular buffer (on the network device side), starting from the start position, sequentially stores the received bit string into the virtual circular buffer of the network device, and combines the received bit string with the received bit string. An order of selecting RV values is [0, 2, 3, 1]. A case in which the nominal repetition is not segmented is used as an example, a start position of a bit string transmitted in the first nominal repetition is a start position of RV0, and a start position of a bit string transmitted in the second nominal repetition is a start position of RV2, a start position of a bit string transmitted in the third nominal repetition is a start position of the RV3, and a start position of a bit string transmitted in the fourth nominal repetition is a start position of the RV1. Because a quantity of frequency domain resource units corresponding to a single actual repetition is the same as that corresponding to a single nominal repetition, but a quantity of time domain resource units corresponding to the single actual repetition is less than that corresponding to the single nominal repetition, a length of a bit string sent in the single actual repetition becomes shorter, and a bit string sequence sent in the single actual repetition may not exceed a next RV start point. In this way, a part of a bit string (a bit string represented by an ellipse in FIG. 2) between the bit string sequence sent in the single actual repetition and the next RV start point cannot be transmitted to the network device. In other words, the bit string received by the network device is missing. As a result, the network device cannot correctly perform decoding, and reliability of data transmission is reduced.

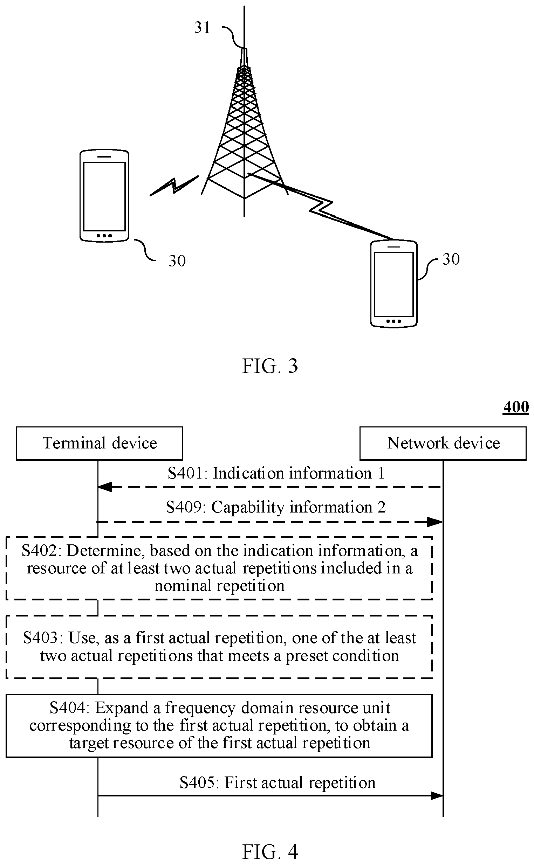

In view of this, an embodiment of this application provides a transmission method. The transmission method in this embodiment of this application is applicable to various communication systems. The transmission method provided in this embodiment of this application may be applied to a long term evolution (long term evolution, LTE) system, a fifth-generation (fifth-generation, 5G) communication network, another similar network, or another future network. FIG. 3 is a schematic diagram of an architecture of a communication system applicable to a transmission method according to an embodiment of this application. The communication system may include at least two communication devices. The communication device may be a terminal device 30 and a network device 31. There may be one or more terminal devices 30 and network devices 31. FIG. 3 shows only two terminal devices 30 and one network device 31. FIG. 3 is merely a schematic diagram, and does not constitute a limitation on an application scenario of the transmission method in embodiments of this application.

The terminal device 30 may also be referred to as user equipment (user equipment, UE), a terminal, an access terminal, a subscriber unit, a subscriber station, a mobile station, a remote station, a remote terminal, a mobile device, a user terminal, a wireless communication device, a user agent, a user apparatus, or the like. The terminal device may be a wireless terminal or a wired terminal. The wireless terminal may be a device with a wireless transceiver function, and may be deployed on land, including an indoors device or an outdoors device, a handheld device, or a vehicle-mounted device. It can also be deployed on the water surface (such as a ship). It can also be deployed in the air (for example, on aircraft, balloons, satellites). The terminal device may be an unmanned aerial vehicle or an internet of things (internet of things, IoT) device (for example a sensor, an electricity meter, and a water meter), a vehicle-to-everything (vehicle-to-everything, V2X) device, a station (station, ST) in a wireless local area network (wireless local area networks, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, an in-vehicle device, or a wearable device (which may also be referred to as a wearable intelligent device). Alternatively, the terminal device may be a terminal in a next generation communication system, for example, a terminal in a 5G communication system, a terminal in a future evolved public land mobile network (public land mobile network, PLMN), or a terminal in an NR communication system. This is not limited in embodiments of this application.

The network device 31 is a device in a wireless communication network, for example, a radio access network (radio access network, RAN) node that connects the terminal device 30 to the wireless communication network. Currently, examples of some RAN nodes are: gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB, or home NodeB, HNB), a base band unit (base band unit, BBU), a wireless-fidelity (wireless-fidelity, Wi-Fi) access point (access point, AP), a network side device in a future 5G communication network or a communication network after 5G, or the like.

The communication system and the service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

The following describes in detail the transmission method provided in embodiments of this application.

It should be noted that, in the following embodiments of this application, a name of a message between network elements, a name of a parameter in a message, or the like is merely an example. In a specific implementation, another name may be used. A unified description is made herein, and details are not described herein again.

An embodiment of this application provides a transmission method 400. The transmission method 400 is applied to a repeated transmission process. When a communication device includes a terminal device and a network device, uplink transmission is used as an example. Referring to FIG. 4, the method includes the following steps.

S401. A network device sends indication information 1 to a terminal device. Correspondingly, the terminal device receives the indication information 1 from the network device.

The indication information 1 is used to determine a resource of a nominal repetition.

Specific parameters included in the indication information 1 may be but are not limited to the following description.

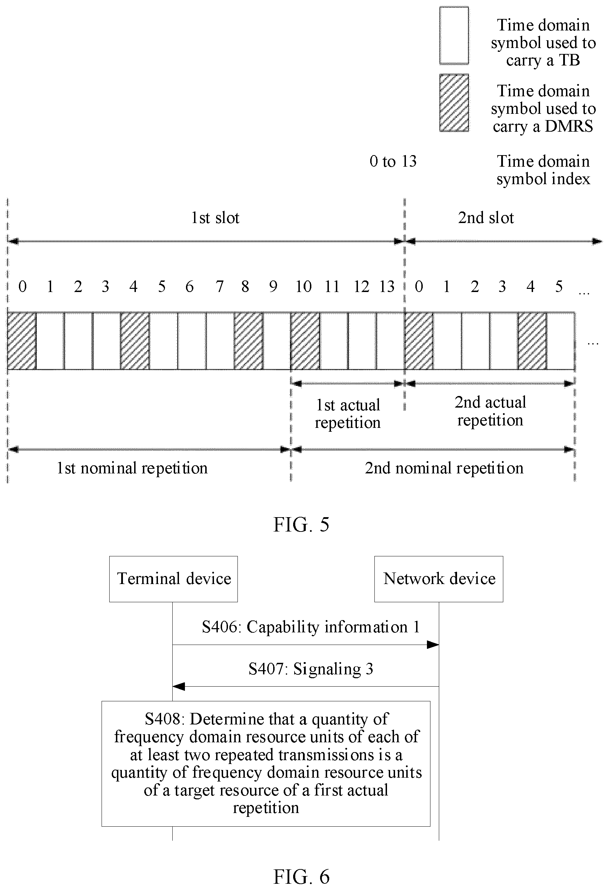

First, a quantity of nominal repetitions, for example, an integer greater than or equal to 1. In this case, the indication information 1 may be information in RRC signaling, that is, a parameter "nominal repetition quantity" is indicated by the RRC signaling. In embodiments of this application, the two nominal repetitions shown in FIG. 5 are used as an example, and the two nominal repetitions are respectively recorded as a 1st nominal repetition and a 2nd nominal repetition.

Second, a type of nominal repetition. In embodiments of this application, the "PUSCH repetition transmission type B" is used as an example for description. In this case, the indication information 1 may be information in RRC signaling, that is, a parameter "nominal repetition type" is indicated by the RRC signaling.

Third, a start position of a time domain resource unit in nominal repetition for the first time and a quantity of time domain resource units corresponding to each nominal repetition. For example, when "the time domain resource unit is a time domain symbol", the start position may be a position of a time domain symbol corresponding to an index S of the time domain symbol. A "of time domain resource unit quantity" corresponding to each nominal repetition may be a "time domain symbol quantity L". When the terminal device does not access the communication network, the indication information 1 may be DCI, that is, values of "S and L" are indicated by DCI signaling. When the terminal device accesses the communication network, the indication information 1 may be RRC signaling, and the terminal device determines the foregoing values of "S and L" based on SLIV in the RRC signaling. Still using the scenario shown in FIG. 5 as an example, a value of S is 0, that is, the first time domain symbol in the current slot is used as a start position of the first nominal repetition. A value of L is 10, that is, there are 10 time domain symbols corresponding to each nominal repetition. As shown in FIG. 5, in time domain, a time domain resource corresponding to the 1st nominal repetition is the first 10 time domain symbols in a current slot, that is, time domain symbols corresponding to indexes 0 to 9 of time domain symbols in the first slot in FIG. 5. A time domain resource corresponding to the 2nd nominal repetition is the last four time domain symbols of the current slot (namely, time domain symbols corresponding to indexes 10 to 13 of time domain symbols in the first slot in FIG. 5), and first six time domain symbols in a next slot of the current slot (namely, time domain symbols corresponding to indexes 0 to 5 of time domain symbols in the second slot in FIG. 5).

Fourth, information about an available time domain resource, for example, which time domain resource unit can send the uplink data. In this case, the indication information 1 may be DCI, that is, the DCI carries the foregoing "information about the available time domain resource", so that the terminal device sends the uplink data to the network device on the available time domain resource. The scenario shown in FIG. 5 is still used as an example. An "available time domain resource" includes all time domain symbols in a current slot and first six time domain symbols in a next slot of the current slot.

Fifth, information about a frequency domain resource, for example, which frequency domain resource unit can be used to send the uplink data. In this case, the indication information 1 may be DCI, that is, the DCI carries the foregoing "information about the frequency domain resource", so that the terminal device sends the uplink data to the network device on the available frequency domain resource. The scenario shown in FIG. 5 is still used as an example. When "the frequency domain resource unit is an RB", the DCI indicates that a quantity of available RBs is 10. That is, the 1st nominal repetition and the 2nd nominal repetition are respectively corresponding to 10 RBs.

Different parameters included in the foregoing indication information 1 may be carried in different signaling for separate indication.

S402. The terminal device determines, based on the indication information 1, a resource of at least two actual repetitions included in a nominal repetition.

For example, the foregoing two nominal repetitions are still used as an example. If neither of the two nominal repetitions encounters a slot boundary or an unavailable time domain resource unit, neither of the two nominal repetitions is segmented (not shown in FIG. 5). The terminal device sends the uplink data to the network device on the determined resource of the nominal repetition. Correspondingly, the network device receives the uplink data from the terminal device on the resource indicated by the indication information 1. For details, refer to related technical descriptions. Details are not described herein again.

If at least one of the two nominal repetitions encounters a slot boundary or an unavailable time domain resource unit, a nominal repetition that encounters a slot boundary or an unavailable time domain resource unit is segmented. In other words, when at least one of the two nominal repetitions encounters a slot boundary or an unavailable time domain resource unit, the one nominal repetition that encounters a slot boundary or an unavailable time domain resource unit includes at least two actual repetitions. For example, the scenario shown in FIG. 5 is used as an example. The 1 st nominal repetition does not encounter a slot boundary and an unavailable time domain resource unit, the 1st nominal repetition is not segmented, and the 1st nominal repetition does not include an actual repetition. The 2nd nominal repetition encounters a slot boundary (as shown by a vertical dashed line in FIG. 5), the 2nd nominal repetition is segmented, and the 2nd nominal repetition includes two actual repetitions, which are respectively recorded as the 1st actual repetition and the 2nd actual repetition. The resources for the 1st actual repetition and the 2nd actual repetition are shown in FIG. 5.

It should be noted that, in embodiments of this application, the segmented nominal repetition is described as a "first nominal repetition". That is, a nominal repetition including at least two actual repetitions is described as a "first nominal repetition". The scenario shown in FIG. 5 is used as an example, and the "first nominal repetition" is a 2nd nominal repetition in FIG. 5. When the first nominal repetition includes at least two actual repetitions, the terminal device performs S403.

S403. The terminal device uses one actual repetition that meets a preset condition and that is in the at least two actual repetitions as a first actual repetition.

The preset condition is used to filter out actual repetitions on which frequency domain resource unit extension needs to be performed. For example, the preset condition may be but is not limited to the following three cases.

Case 1: An actual repetition on which frequency domain resource unit extension needs to be performed is filtered by using a preset condition based on a threshold. The following is described from two aspects: "a quantity of time domain resource units" and "a bit rate".

In terms of a quantity of time domain resource units, the preset condition may be implemented as follows: the quantity of time domain resource units of the first actual repetition is less than the first threshold.

The "first threshold" is described by using two examples:

In a first possible example, the "first threshold" is implemented as "a threshold of a preset quantity of time domain resource units". The first threshold meets the following formula:

$$T_1 = L \times a_1 \qquad \text{Formula (2)}$$

$T_1$ represents the first threshold, L represents the quantity of time domain resource units that are configured for the first nominal repetition and $a_1$ represents the first coefficient of proportion. In other words, the first threshold is equal to "an $a_1$ times of the quantity of time domain resource units that are configured for the first nominal repetition".

The first coefficient of proportion $a_1$ may be a predefined value, or may be a value configured by the network device for the terminal device by using signaling. This is not limited in embodiments of this application. A value range of the first proportional coefficient $a_1$ is: (0,1]. For example, $a_1 = 0.9$, and $L = 10$ is used as an example, in a case in which formula (2) is used to calculate the first threshold, $T_1 = 9$. For another example, $a_1 = 1$, and $L = 10$ is used as an example, in a case in which the first threshold is calculated by using formula (2), $T_1 = 10$. For example, in the scenario shown in FIG. 5, the first threshold $T_1 = 5$ is used as an example. A quantity of time domain symbols corresponding to the 1st actual repetition is 4, which is less than the first threshold $T_1$. In this case, the 1st actual repetition meets the preset condition, may be used as the first actual repetition, and frequency domain resource extension needs to be performed. The quantity of time domain symbols corresponding to the 2nd actual repetition is 6, which is greater than the first threshold $T_1$. In this case, the 2nd actual repetition does not meet the preset condition, and frequency domain resource extension does not need to be performed.

In a case of the first coefficient of proportion $a_1 = 1$, "the first threshold" is equal to "the quantity of time domain resource units that are configured for the first nominal repetition". Because one nominal repetition is segmented to obtain at least two actual repetitions, a quantity of time domain resource units of any one of the at least two actual repetitions is less than the quantity of time domain resource units that are configured for the first nominal repetition, that is, any one of the at least two actual repetitions meets the preset condition, and frequency domain resource extension needs to be performed. The scenario shown in FIG. 5 is still used as an example. If a quantity of time domain resource units that are configured for the first nominal repetition (that is, the 2nd nominal repetition) is 10 time domain symbols, the first threshold is 10 time domain symbols. In this way, both the 1st actual repetition and the 2nd actual repetition meet the preset condition, and the terminal device may use the 1st actual repetition as the first actual repetition, or may use the 2nd actual repetition as the first actual repetition.

It should be noted that, in embodiments of this application, the "time domain resource unit" may be a time domain resource unit that carries a TB and a demodulation reference signal (demodulation reference signal, DMRS). In this case, the scenario shown in FIG. 5 is still used as an example. In the first nominal repetition (that is, the 2nd nominal repetition), there are seven time domain symbols used to transmit the TB, and there are three time domain symbols used to carry the DMRS. Therefore, a quantity of time domain resource units that are configured for the first nominal repetition (that is, the 2nd nominal repetition) is 10 time domain symbols. The "time domain resource unit" may also be a valid time domain resource unit, that is, includes a time domain resource unit used to carry a TB, but does not include a time domain resource unit used to carry a DMRS. In this case, the scenario shown in FIG. 5 is still used as an example. In the first nominal repetition (that is, the 2nd nominal repetition), there are seven time domain symbols used to transmit the TB Therefore, a quantity of time domain resource units that are configured for the first nominal repetition (that is, the 2nd nominal repetition) is seven time domain symbols.

In a second possible example, "the first threshold" is implemented as "a threshold of the quantity of time domain resource units indicated by signaling 1". The signaling 1 is signaling received by the terminal device from the network device, so that the network device flexibly adjusts actual repetitions for which the terminal device performs frequency domain resource extension.

In terms of a bit rate, the preset condition may be implemented as follows: The bit rate for the first actual repetition is greater than a second threshold.

In embodiments of this application, "bit rate" refers to an actual bit rate at which a TB is transmitted on a resource corresponding to an actual repetition, for example, a ratio of "a quantity of valid information bits in the TB" to "a quantity of bits transmitted in this actual repetition transmission". For example, valid information bits in one TB are 100 bits (bit), and an LDPC encoding bit rate is 1/3. After LDPC encoding is performed on valid information bits in the TB, an LDPC-encoded bit string is obtained. The LDPC-encoded bit string is 300 bits. If the terminal device actually transmits 200 bits in the LDPC-encoded bit string when transmitting the TB on a resource of some actual repetition, the bit rate is 1/2. A bit rate for the first actual repetition is an actual bit rate at which the TB is transmitted in the first actual repetition. FIG. 5 is used as an example. When the 1st actual repetition is implemented as the first actual repetition, the bit rate for the first actual repetition is a bit rate at which the TB is transmitted on a resource corresponding to the 1st actual repetition (that is, a resource corresponding to the last four time domain symbols of the first slot in time domain). When the first actual repetition is implemented as the 2nd actual repetition, the bit rate for the first actual repetition is a bit rate at which the TB is transmitted on a resource corresponding to the 2nd actual repetition (that is, a resource corresponding to the first six time domain symbols of the second slot in time domain).

The "second threshold" is described by using two examples:

In a first possible example, the "second threshold" is implemented as "a preset threshold of a bit rate". The second threshold meets the following formula:

$$T_2 = P \times a_2 \qquad \text{Formula (3)}$$

$T_2$ represents the second threshold, $P$ represents the bit rate configured for the first nominal repetition, and $a_2$ represents the second proportional coefficient. That is, the second threshold is equal to "an $a_2$ times of the bit rate configured for the first nominal repetition". FIG. 5 is used as an example. When the first nominal repetition is implemented as the 2nd nominal repetition, the bit rate $P$ configured for the first nominal repetition is a bit rate at which a TB is transmitted on a resource corresponding to the 2nd nominal repetition (that is, a resource corresponding to four time domain symbols after the first slot and six time domain symbols before the second slot in time domain).

The second coefficient of proportion $a_2$ may be a predefined value, or may be a value configured by the network device for the terminal device by using signaling. This is not limited in embodiments of this application. A value range of the second proportional coefficient $a_2$ is: $a_2 \geq 1$. For example, $a_2 = 2$, and $P = 1/2$ is used as an example, in a case in which formula (3) is used to calculate the second threshold, $T_2 = 1$. For another example, $a_2 = 1$, $P = 1/2$ is used as an example, in a case in which the second threshold is calculated by using formula (3), $T_2 = 1/2$.

In a case of the second proportional coefficient $a_2 = 1$, the "second threshold" is equal to the "a bit rate configured for a first nominal repetition". In this case, because one nominal repetition is segmented to obtain at least two actual repetitions, a bit rate for any one of the at least two actual repetitions is greater than a bit rate configured for the first nominal repetition, that is, any one of the at least two actual repetitions meets the preset condition, and frequency domain resource extension needs to be performed. The scenario shown in FIG. 5 is still used as an example. Both the 1st actual repetition and the 2nd actual repetition meet the preset condition, and the terminal device may use the 1st actual repetition as the first actual repetition, or may use the 2nd actual repetition as the first actual repetition.

In a second possible example, the "second threshold" is implemented as "a threshold of a bit rate indicated by signaling 2". The signaling 2 is signaling received by the terminal device from the network device, so that the network device flexibly adjusts actual repetitions for which the terminal device performs frequency domain resource extension.

Case 2: An actual repetition on which frequency domain resource extension needs to be performed is filtered out in a "comparison manner". The following is still described from two aspects: "a quantity of time domain resource units" and "a bit rate".

In terms of a quantity of time domain resource units, the preset condition may be implemented as follows: The first actual repetition is one actual repetition with a minimum quantity of time domain resource units in the at least two actual repetitions.

For descriptions of the "time domain resource unit", refer to related descriptions in "case 1", and details are not described herein again. The scenario shown in FIG. 5 is still used as an example. There are four time domain symbols of the 1st actual repetition, and there are six time domain symbols of the 2nd actual repetition. Therefore, in the two actual repetitions shown in FIG. 5, a quantity of time domain symbols of the 1st actual repetition is the minimum, a preset condition is met, and frequency domain resource extension needs to be performed. In other words, the terminal device uses the 1st actual repetition as the first actual repetition.

In terms of a bit rate, the preset condition may be implemented as follows: The first actual repetition is one actual repetition with a maximum bit rate in the at least two actual repetitions.

For the description of "bit rate", refer to the related description in "case 1", and details are not described herein again. The scenario shown in FIG. 5 is still used as an example. There are four time domain symbols of the 1st actual repetition, and there are six time domain symbols of the 2nd actual repetition. In addition, TBSs corresponding to the 1st actual repetition and the 2nd actual repetition are the same. Therefore, a bit rate for the 1st actual repetition is the maximum, that is, the 1st actual repetition meets the preset condition, and frequency domain resource extension needs to be performed. In other words, the terminal device uses the 1st actual repetition as the first actual repetition.

Case 3: The preset condition may be implemented as follows. The first actual repetition is an actual repetition included in a nominal repetition. That is, each actual repetition included in the nominal repetition is used as the first actual repetition. Each actual repetition included in the nominal repetition belongs to an actual repetition on which frequency domain resource unit extension is to be performed.

For example, the scenario shown in FIG. 5 is still used as an example, and the 2nd nominal repetition includes the 1st actual repetition and the 2nd actual repetition. In this case, the terminal device determines that both the 1st actual repetition and the 2nd actual repetition are used as the first actual repetition.

It can be learned from the description of S403 that there may be one or more actual repetitions that meet the preset condition. In other words, the terminal device can determine at least one first actual repetition. For each first actual repetition, the terminal device performs S404 and S405.

S404. The terminal device expands a frequency domain resource unit corresponding to the first actual repetition, to obtain a target resource of the first actual repetition.

The first actual repetition is one actual repetition that meets the preset condition and that is determined in S403. The terminal device expands the frequency domain resource unit based on "the quantity of frequency domain resource units corresponding to the first actual repetition", to obtain the target resource of the first actual repetition. In other words, in time domain, the time domain resource of the first actual repetition remains unchanged. In frequency domain, extension processing is performed on the quantity of frequency domain resource units of the target resource of the first actual repetition. Therefore, the quantity of frequency domain resource units of the target resource is greater than the quantity of frequency domain resource units corresponding to the first nominal repetition.

A process of determining the "quantity of frequency domain resource units of the target resource of the first actual repetition" is described in the following in two cases.

In a first case, the network device does not indicate an object on which joint channel estimation is performed with the first actual repetition, and/or the terminal device does not support joint channel estimation. In this case, the quantity of frequency domain resource units of the target resource of the first actual repetition is determined based on the quantity of frequency domain resource units of the first nominal repetition and the first expansion factor. The first expansion factor indicates an adjustment proportion of the quantity of frequency domain resource units of the first nominal repetition. For example, the quantity of frequency domain resource units of the target resource of the first actual repetition meets:

$$M_1 = [N \times k_1] \qquad \text{Formula (4)}$$

$M_1$ represents the quantity of frequency domain resource units of the target resource of the first actual repetition, $N$ represents the quantity of frequency domain resource units the first nominal repetition, $k_1$ represents the first expansion factor, and [ ] represents a rounding operator, such as rounding off, rounding down to the nearest integer, or rounding up to the nearest integer. The first expansion factor is a ratio of the quantity of time domain resource units of the first nominal repetition to the quantity of time domain resource units of the target resource.

For example, when "the 'quantity of time domain resource units' includes the quantity of time domain resource units that are used to carry the TB and the DMRS", the scenario shown in FIG. 5 is still used as an example, and the first nominal repetition is implemented as the 2nd nominal repetition. The quantity of time domain resource units of the first nominal repetition is 10 time domain symbols. If a quantity of time domain resource units of the 1st actual repetition is four time domain symbols, an expansion factor corresponding to the 1st actual repetition is 5/2. If a quantity of time domain resource units of the 2nd actual repetition is six time domain symbols, an expansion factor corresponding to the 2nd actual repetition is 5/3. If the first actual repetition is implemented as the 1st actual repetition, the first expansion factor is 5/2. That the quantity of frequency domain resource units of the first nominal repetition (that is, 2nd nominal repetition in FIG. 5) is10 RBs is used as an example, in a case of rounding down to the nearest integer, the quantity of frequency domain resource units of the target resource of the first actual repetition (that is, 1st actual repetition in FIG. 5) is 25 RBs. If the first actual repetition is implemented as the 2nd actual repetition, the first expansion factor is 5/3.

That the quantity of frequency domain resource units of the first nominal repetition (that is, 2nd nominal repetition in FIG. 5) is 10 RBs is still used as an example, in a case of rounding down to the nearest integer, the quantity of frequency domain resource units of the target resource of the first actual repetition (that is, 2nd actual repetition in FIG. 5) is 16 RBs.

Alternatively, the "time domain resource unit" may alternatively refer to a time domain resource unit that is used to carry a TB, but does not include a time domain resource unit that is used to carry a DMRS. In this case, the scenario shown in FIG. 5 is still used as an example, and a quantity of time domain resource units of the first nominal repetition (that is, the 2nd nominal repetition in FIG. 5) is 7 time domain symbols. If a quantity of time domain resource units of the 1st actual repetition is three time domain symbols, an expansion factor corresponding to the 1st actual repetition is 7/3. If a quantity of time domain resource units of the 2nd actual repetition is four time domain symbols, an expansion factor corresponding to the 2nd actual repetition is 7/4. If the first actual repetition is implemented as the 1st actual repetition, the first expansion factor is 7/3. That the quantity of frequency domain resource units of the first nominal repetition (that is, 2nd nominal repetition in FIG. 5) is 10 RBs is used as an example, in a case of rounding down to the nearest integer, the quantity of frequency domain resource units of the target resource of the first actual repetition (that is, 1st actual repetition in FIG. 5) is 23 RBs. If the first actual repetition is implemented as the 2nd actual repetition, the first expansion factor is 7/4. That the quantity of frequency domain resource units of the first nominal repetition (that is, 2nd nominal repetition in FIG. 5) is 10 RBs is still used as an example, in a case of rounding down to the nearest integer, the quantity of frequency domain resource units of the target resource of the first actual repetition (that is, 2nd actual repetition in FIG. 5) is 17 RBs.

In this way, the terminal device may expand, based on the quantity of frequency domain resource units of the first nominal repetition and the first expansion factor, the quantity of frequency domain resource units of the first actual repetition, to obtain an expanded quantity of frequency domain resource units, so that transmission resources of the first actual repetition used to transmit the TB are increased. Reducing a bit rate at which the TB is transmitted in the first actual repetition helps improve a possibility of successfully sending a bit string.

In a second case, the terminal device supports joint channel estimation, and the network device indicates an object on which the joint channel estimation is performed with the first actual repetition. In this case, a process of determining the "quantity of frequency domain resource units of the target resource of the first actual repetition" is described in two manners.

Manner 1: The quantity of frequency domain resource units of the target resource of the first actual repetition is determined based on the quantity of frequency domain resource units of the first nominal repetition and the target expansion factor. The target expansion factor indicates an adjustment proportion of the quantity of frequency domain resource units of the first nominal repetition. For example, the quantity of frequency domain resource units of the target resource of the first actual repetition meets:

$$M_1 = \left[ N \times k' \right] \qquad \text{Formula (5)}$$

$M_1$ represents the quantity of frequency domain resource units of the target resource of the first actual repetition, $N$ represents the quantity of frequency domain resource units the first nominal repetition, $k'$ represents the target expansion factor, and [ ] represents a rounding operator, such as rounding off, rounding down to the nearest integer, or rounding up to the nearest integer.

For example, the target expansion factor is a value determined based on the first expansion factor and the reference factor. For example, the target expansion factor is a maximum value of the first expansion factor and the reference factor, or the target expansion factor is a minimum value of the first expansion factor and the reference factor, or the target expansion factor is an average value of the first expansion factor and the reference factor. For the description of the "first expansion factor", refer to the related description of formula (4). Details are not described herein again. The reference factor includes at least one of the following.

The first item is a second expansion factor. The second expansion factor is a ratio of the quantity of time domain resource units of the first nominal repetition to the quantity of time domain resource units of the second actual repetition. The second actual repetition belongs to the at least two actual repetitions, and is different from the first actual repetition. The second actual repetition may be one actual repetition that meets the foregoing preset condition, or may be one actual repetition that does not meet the foregoing preset condition. The scenario shown in FIG. 5 is still used as an example. When the first actual repetition is implemented as the 1st actual repetition, the second actual repetition is implemented as the 2nd actual repetition. Alternatively, when the first actual repetition is implemented as the 2nd actual repetition, the second actual repetition is implemented as the 1st actual repetition. For a process of determining the expansion factors respectively corresponding to the 1st actual repetition and the 2nd actual repetition, refer to the related description of the first expansion factor. Details are not described herein again.

The second item is a preset value, for example, 1.

For example, when the network device indicates, by using signaling 3, to perform joint channel estimation on the first actual repetition and the second actual repetition, the reference factor includes the second expansion factor. In this case, the target expansion factor may be a maximum value of the first expansion factor and the second expansion factor, or may be a minimum value of the first expansion factor and the second expansion factor, or may be an average value of the first expansion factor and the second expansion factor. After determining the target expansion factor, the terminal device calculates the quantity of frequency domain resource units of the target resource of the first actual repetition with reference to formula (5). For the description of the signaling 3, refer to the related description of S407. Details are not described herein again.

For another example, when the network device indicates, by using signaling 3, to perform joint channel estimation on the first actual repetition and the second nominal repetition, the reference factor includes a preset value. The second nominal repetition is a nominal repetition that is different from the first nominal repetition. The second nominal repetition and the first nominal repetition may be consecutive or inconsecutive in time domain. This is not limited in embodiments of this application. In a case in which "the second nominal repetition and the first nominal repetition are consecutive in time domain", the scenario shown in FIG. 5 is still used as an example. If the first nominal repetition is implemented as the 2nd nominal repetition, the second nominal repetition may be implemented as the 1st nominal repetition. In this case, the target expansion factor may be a maximum value of the first expansion factor and the preset value, or may be an average value of the first expansion factor and the preset value. After determining the target expansion factor, the terminal device calculates the quantity of frequency domain resource units of the target resource of the first actual repetition with reference to formula (5).

In other words, in Manner 1, the terminal device first determines the target expansion factor, and then determines the quantity of frequency domain resource units of the target resource of the first actual repetition with reference to formula (5).

Manner 2: The quantity of frequency domain resource units of the target resource of the first actual repetition is a value determined based on a quantity of first frequency domain resource units and a quantity of reference frequency domain resource units. The quantity of the first frequency domain resource units is a value determined based on formula (4). For details, refer to related descriptions in formula (4). Details are not described herein again. The quantity of reference frequency domain resource units includes at least one of the following.

The first item is a quantity of second frequency domain resource units. The quantity of second frequency domain resource units is determined based on the quantity of frequency domain resource units of the first nominal repetition and a second expansion factor. For the description of the second expansion factor, refer to the description of the second expansion factor in the "reference factor", and details are not described herein again. For example, the quantity of second frequency domain resource units meets:

$$M_2 = [N \times k_2] \qquad \text{Formula (6)}$$

$M_2$ represents the quantity of second frequency domain resource units, $N$ represents the quantity of frequency domain resource units the first nominal repetition, $k_2$ represents the second expansion factor, and [ ] represents a rounding operator, such as rounding off, rounding down to the nearest integer, or rounding up to the nearest integer. For example, when "the 'quantity of time domain resource units' includes the quantity of time domain resource units that are used to carry the TB and the DMRS", the scenario shown in FIG. 5 is still used as an example. If the first actual repetition is implemented as the 1st actual repetition, the second actual repetition is implemented as the 2nd actual repetition, and the second expansion factor is an expansion factor corresponding to the 2nd actual repetition, that is, the second expansion factor is 5/3. That the quantity of frequency domain resource units of the first nominal repetition is 10 RBs is still used as an example, and in a case in which rounding down to the nearest integer is performed, the quantity of the second frequency domain resource units is 16 RBs. If the first actual repetition is implemented as the 2nd actual repetition, the second actual repetition is implemented as the 1st actual repetition, and the second expansion factor is an expansion factor corresponding to the 1st actual repetition, that is, the second expansion factor is 5/2. That the quantity of the frequency domain resource units of the first nominal repetition is 10 RBs is still used as an example, and in a case in which rounding down to the nearest integer is performed, the quantity of second frequency domain resource units is 25 RBs. Alternatively, when "the 'time domain resource unit' includes a time domain resource unit used to carry a TB, but does not include a time domain resource unit used to carry a DMRS", the scenario shown in FIG. 5 is still used as an example. If the first actual repetition is implemented as the 1st actual repetition, the second actual repetition is implemented as the 2nd actual repetition, and the second expansion factor is an expansion factor corresponding to the 2nd actual repetition, that is, the second expansion factor is 7/4. That the quantity of frequency domain resource units of the first nominal repetition is 10 RBs is still used as an example, and in a case of rounding down to the nearest integer, the quantity of the second frequency domain resource units is 17 RBs. If the first actual repetition is implemented as the 2nd actual repetition, the second actual repetition is implemented as the 1st actual repetition, and the second expansion factor is an expansion factor corresponding to the 1st actual repetition, that is, the second expansion factor is 7/3. That the quantity of frequency domain resource units of the first nominal repetition is 10 RBs is still used as an example, and in a case of rounding down to the nearest integer, the quantity of the second frequency domain resource units is 23 RBs.

The second item is the quantity of frequency domain resource units of the first nominal repetition. For example, the scenario shown in FIG. 5 is still used as an example, and a quantity of frequency domain resource units of the first nominal repetition is 10 RBs.

For example, when the network device indicates, by using signaling 3, to perform joint channel estimation on the first actual repetition and the second actual repetition, "a quantity of reference frequency domain resource units" includes "a quantity of second frequency domain resource units". In this case, "the quantity of frequency domain resource units of the target resource of the first actual repetition" may be a maximum value of "the quantity of first frequency domain resource units" and "the quantity of second frequency domain resource units", or may be a minimum value of "the quantity of first frequency domain resource units" and "the quantity of second frequency domain resource units", or may be an average value of "the quantity of first frequency domain resource units" and "the quantity of second frequency domain resource units".

For another example, when the network device indicates, by using signaling 3, to perform joint channel estimation on the first actual repetition and the second nominal repetition, "the quantity of reference frequency domain resource units" includes "the quantity of frequency domain resource units of the first nominal repetition". In this case, "the quantity of frequency domain resource units of the target resource of the first actual repetition" may be a maximum value of "the quantity of first frequency domain resource units" and "the quantity of frequency domain resource units of the first nominal repetition", or may be an average value of "the quantity of first frequency domain resource units" and "the quantity of frequency domain resource units of the first nominal repetition". Because the "quantity of frequency domain resource units of the first nominal repetition" is the same as the "quantity of frequency domain resource units of the second nominal repetition", for a process of determining "the quantity of frequency domain resource units of the target resource of the first actual repetition", refer to the parameter "the quantity of frequency domain resource units of the second nominal repetition".

In this way, in a scenario of joint channel estimation, the terminal device can further combine another reference factor (for example, the reference factor and the quantity of reference frequency domain resource units) to determine the quantity of frequency domain resource units of the target resource of the first actual repetition, to meet a requirement of the joint channel estimation.

It should be noted that, in the second case (that is, the terminal device supports joint channel estimation, and the network device indicates an object on which the joint channel estimation is performed with the first actual repetition), quantities of frequency domain resource units corresponding to repeated transmissions on which joint channel estimation is performed and that are indicated by the network device are consistent. For example, when the network device indicates, by using signaling 3, to perform joint channel estimation on the first actual repetition and the second actual repetition, a quantity of frequency domain resource units corresponding to the first actual repetition is the same as that corresponding to the second actual repetition, that is, both are a quantity of frequency domain resource units of the target resource of the first actual repetition. For another example, when the network device indicates, by using signaling 3, to perform joint channel estimation on the first actual repetition and the second nominal repetition, quantities of frequency domain resource units corresponding to the first actual repetition and the second nominal repetition are consistent, that is, both are quantities of frequency domain resource units of the target resource of the first actual repetition. For details, refer to descriptions of S407 and S408. Details are not described herein again.

S405. The terminal device sends the first actual repetition to the network device on a target resource. Correspondingly, the network device receives the first actual repetition from the terminal device on the target resource.

For example, the scenario shown in FIG. 5 is still used as an example, when the first actual repetition implementation is the 1st actual repetition, the terminal device sends the first actual repetition on a target resource obtained after RB extension is performed on the 1st actual repetition. Correspondingly, the network device also performs S402 to S404, so that the network device learns of resources on which the first actual repetition is received, so that the network device successfully performs S405.

In this way, when a single actual repetition and a single nominal repetition are corresponding to a same TBS, although a quantity of time domain resource units corresponding to the first actual repetition is less than a quantity of time domain resource units corresponding to the first nominal repetition, the quantity of frequency domain resource units of the target resource of the first actual repetition is greater than the quantity of frequency domain resource units of the first nominal repetition. Compared with a case in which "a single actual repetition and a single nominal repetition are corresponding to a same quantity of RBs", the target resource of the first actual repetition is expanded in frequency domain, so that a quantity of resources occupied by the first actual repetition increases, and more information bits can be transmitted. Therefore, a bit rate corresponding to the first actual repetition is reduced, and data transmission performance is improved.

It should be noted that, in the second case (that is, "the terminal device supports joint channel estimation, and the network device indicates an object on which joint channel estimation is performed with the first actual repetition"), referring to FIG. 6, the transmission method in embodiments of this application further includes S406 to S408.

S406. The terminal device sends capability information 1 to the network device. Correspondingly, the network device receives the capability information 1 from the terminal device.

The capability information 1 indicates a capability of the terminal device to perform joint channel estimation, so that the network device learns of the capability of the terminal device, and determines whether to indicate, to the terminal device, an object for performing the joint channel estimation.

For example, the capability information 1 may be indicated by using a preset quantity of bits. For example, a quantity of bits may be 1. When a value of the bit is "1", it indicates that the terminal device supports joint channel estimation. When a value of this bit is "0", it indicates that the terminal device does not support joint channel estimation. Alternatively, conversely, when a value of the bit is "1", it indicates that the terminal device does not support joint channel estimation. When a value of this bit is "0", it indicates that the terminal device supports joint channel estimation.

Alternatively, when the terminal device does not support joint channel estimation, the terminal device does not perform S406. Conversely, when the terminal device supports joint channel estimation, the terminal device performs S406. In this case, the capability information 1 indicates that the terminal device supports joint channel estimation.

S407. The network device sends signaling 3 to the terminal device. Correspondingly, the terminal device receives the signaling 3 from the network device.

The signaling 3 indicates that at least two repeated transmissions perform joint channel estimation. The at least two repetition transmissions include the first actual repetition described above.

For example, the at least two repetition transmissions further include at least one of a second actual repetition and a second nominal repetition. For example, the at least two actual repetitions include a first actual repetition and a second actual repetition. For another example, the at least two actual repetitions include a first actual repetition and a second nominal repetition. For another example, the at least two actual repetitions include a first actual repetition, a second actual repetition, and a second nominal repetition. The second nominal repetition may be a nominal repetition segmented into at least two actual repetitions (not shown in FIG. 5), or the second nominal repetition may be a nominal repetition that is not segmented (for example, the 1st nominal repetition in FIG. 5).

It should be noted that, the repeated transmissions indicated by the information 3 are consecutive in time domain. For example, if the at least two repetitions further include a second actual repetition, the first actual repetition and the second actual repetition are consecutive in time domain. The scenario shown in FIG. 5 is still used as an example. The first actual repetition is the 1st actual repetition, the second actual repetition is the 2nd actual repetition, and the 1st actual repetition and the 2nd actual repetition are consecutive in time domain.

For another example, if the at least two repetitions further include the second nominal repetition, the first actual repetition and the second nominal repetition are consecutive in time domain. The scenario shown in FIG. 5 is still used as an example. The first actual repetition is the 1st actual repetition, the second nominal repetition is the 1st nominal repetition, and the 1st actual repetition and the 1st nominal repetition are consecutive in time domain.

For another example, if the at least two repeated transmissions further include a second actual repetition and a second nominal repetition, the first actual repetition, the second actual repetition, and the second nominal repetition are consecutive in time domain. In this case, an arrangement order of the first actual repetition, the second actual repetition, and the second nominal repetition in time domain is not limited. In a first case, when the second nominal repetition, the first actual repetition, and the second actual repetition are successive in time domain, the second nominal repetition and the second actual repetition are inconsecutive in time domain, but the second nominal repetition and the first actual repetition are consecutive in time domain. In addition, the first actual repetition and the second actual repetition are consecutive in time domain. The scenario shown in FIG. 5 is still used as an example, the first actual repetition is the 1st actual repetition, the second actual repetition is the 2nd actual repetition, and the second nominal repetition is the 1st nominal repetition. The 1st nominal repetition, the 1st actual repetition, and the 2nd actual repetition are successive in time domain, but the 1st nominal repetition and the 2nd actual repetition are inconsecutive in time domain. In a second case, when the first actual repetition, the second actual repetition, and the second nominal repetition are successive in time domain, the first actual repetition and the second nominal repetition are inconsecutive in time domain, but the first actual repetition and the second actual repetition are consecutive in time domain. In addition, the second actual repetition and the second nominal repetition are consecutive in time domain. In a third case, when the first actual repetition, the second nominal repetition, and the second actual repetition are successive in time domain, the first actual repetition and the second actual repetition are inconsecutive in time domain, but the first actual repetition and the second nominal repetition are consecutive in time domain. In addition, the second nominal repetition and the second actual repetition are consecutive in time domain. That is, the at least two repeated transmissions may further include repeated transmissions that are inconsecutive with the first actual repetition in time domain. "Repeated transmission that is inconsecutive with the first actual repetition in time domain" may be actual repetition, or may be nominal repetition. This is not limited in embodiments of this application.

S408. The terminal device determines that each of quantities of frequency domain resource units of the at least two repeated transmissions is a quantity of frequency domain resource units of the target resource of the first actual repetition.

For example, if the at least two repeated transmissions include a first actual repetition and a second actual repetition, a quantity of frequency domain resource units of the first actual repetition is the same as a quantity of frequency domain resource units of the second actual repetition. For another example, if the at least two repeated transmissions include a first actual repetition and a second nominal repetition, a quantity of frequency domain resource units of the first actual repetition is the same as a quantity of frequency domain resource units of the second nominal repetition. For another example, if the at least two repeated transmissions include a first actual repetition, a second meter actual repetition, and a second nominal repetition, a quantity of frequency domain resource units of the first actual repetition, a quantity of frequency domain resource units of the second meter actual repetition, and a quantity of frequency domain resource units of the second nominal repetition are all the same. For a process of determining "the quantity of frequency domain resource units of the target resource of the first actual repetition", refer to related descriptions of "Case 2" in S404. Details are not described herein again.

In other words, after the terminal device receives the signaling 3, the terminal device can determine that frequency domain resource units corresponding to the foregoing "at least two repeated transmissions" are the same, to implement joint channel estimation.

In some embodiments, referring to FIG. 4, the transmission method in embodiments of this application further includes S409.

S409. The terminal device sends capability information 2 to the network device. Correspondingly, the network device receives the capability information 2 from the terminal device.

The capability information 2 indicates a capability of the terminal device to expand the frequency domain resource unit.

For example, the capability information 2 may be indicated by using a preset quantity of bits. For example, a quantity of bits may be 1. When a value of the bit is "1", it indicates that the terminal device has a capability of expanding a frequency domain resource unit. When a value of this bit is "0", it indicates that the terminal device does not have a capability of expanding a frequency domain resource unit. Alternatively, conversely, when a value of the bit is "1", it indicates that the terminal device does not have a capability of expanding a frequency domain resource unit. When a value of this bit is "0", it indicates that the terminal device has a capability of expanding a frequency domain resource unit.

Alternatively, when the terminal device does not have a capability of expanding a frequency domain resource unit, the terminal device does not perform S409. Conversely, when the terminal device has a capability of expanding a frequency domain resource unit, the terminal device performs S409. In this case, the capability information 2 indicates that the terminal device has a capability of expanding the frequency domain resource unit.

In this way, the network device obtains the capability of the terminal device based on the capability information 2. For example, when the network device learns that the terminal device can perform frequency domain resource unit extension, after performing S401, the network device still performs S402 to S404, to perform frequency domain resource unit extension on a resource indicated by the indication information 1. Therefore, it is learned that the target resource of the first actual repetition is received. Conversely, if the network device determines that the terminal device does not have a capability of expanding the frequency domain resource unit, the network device does not need to perform S402, S403, and S404, and receives the repeated transmission based on the resource configured in the indication information 1.

The foregoing steps are described by using "uplink transmission" as an example. In a "downlink transmission" process, the transmission method in embodiments of this application is also applicable. Compared with "uplink transmission", the difference lies in that S405 is replaced with: The network device sends the first actual repetition to the terminal device on a target resource. Correspondingly, the terminal device receives the first actual repetition from the network device on the target resource.

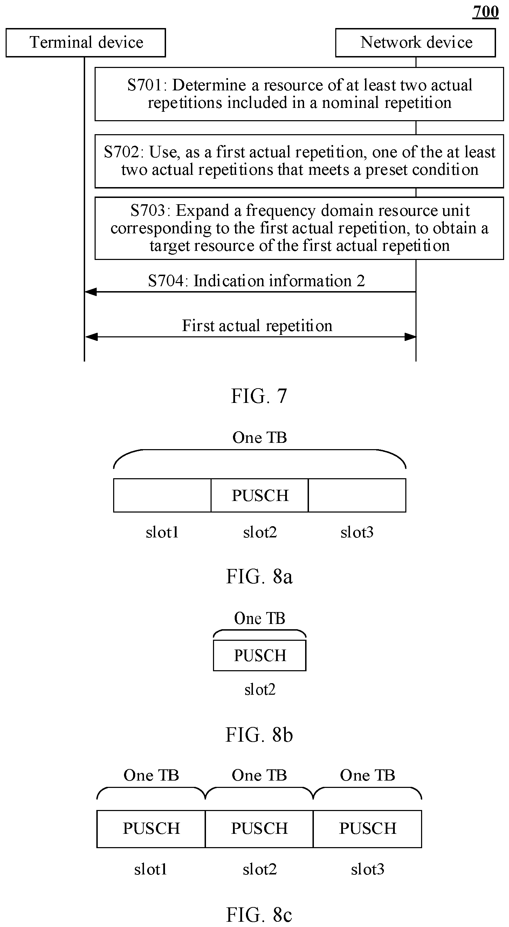

In addition, an embodiment of this application further provides a second transmission method 700. The transmission method 700 is applied to a repeated transmission process. When the communication device includes a terminal device and a network device, referring to FIG. 7, the transmission method in embodiments of this application includes the following steps.

S701. A network device determines a resource of at least two actual repetitions included in a nominal repetition.

For details of S701, refer to the description of S402 in the foregoing method 400.

Details are not described herein again.

S702. The network device uses one actual repetition that meets a preset condition and that is in the at least two actual repetitions as a first actual repetition.

For details of S702, refer to the description of S403 in the foregoing method 400. Details are not described herein again.

S703. The network device expands a frequency domain resource unit corresponding to the first actual repetition, to obtain a target resource of the first actual repetition.

For details of S703, refer to the description of S404 in the foregoing method 400. Details are not described herein again.

S704. A network device sends indication information 2 to a terminal device. Correspondingly, the terminal device receives the indication information 2 from the network device.

The indication information 2 indicates the target resource of the first actual repetition. For example, the indication information 2 may be information in RRC signaling or DCI. Then, in a case of uplink transmission, the terminal device sends the first actual repetition to the network device on the target resource indicated by the indication information 2. Correspondingly, the network device receives the first actual repetition from the terminal device on the target resource indicated by the indication information 2. In a case of downlink transmission, the network device sends the first actual repetition to the terminal device on the target resource indicated by the indication information 2. Correspondingly, the terminal device receives the first actual repetition from the network device on the target resource indicated by the indication information 2.

In other words, when a single actual repetition and a single nominal repetition are corresponding to a same TBS, the network device indicates the target resource of the first actual repetition to the terminal device, and the terminal device does not need to expand a frequency domain resource unit. Although a quantity of time domain resource units corresponding to the first actual repetition is less than a quantity of time domain resource units corresponding to the first nominal repetition, the quantity of frequency domain resource units of the target resource of the first actual repetition is greater than the quantity of frequency domain resource units of the first nominal repetition. Compared with a case in which "a single actual repetition and a single nominal repetition are corresponding to a same quantity of RBs", the target resource of the first actual repetition is expanded in frequency domain, so that a quantity of resources occupied by the first actual repetition increases, and more information bits can be transmitted. Therefore, a bit rate corresponding to the first actual repetition is reduced, and data transmission performance is improved.

To obtain a channel coding gain and reduce header overheads during data packet splitting, currently in R17, data transmission is supported in by using a transport block (transport block, TB) over multiple slots (TB over multi-slot, TBoMS). In other words, uplink data may be transmitted through a physical uplink shared channel (physical uplink shared channel, PUSCH) used to carry the TB based on a plurality of corresponding slots (slot). Certainly, the TB may also be transmitted based on a single slot, that is, uplink data may be transmitted through one PUSCH used to carry the TB in a corresponding slot.

When data is transmitted by using the TBoMS, one transport block occupies a plurality of slots, and a transport block size is calculated based on all resource elements (resource element, RE) that are used for data transmission and that are included in the plurality of slots.

To facilitate understanding of the TBoMS and meanings of transmitting the TB based on a single slot in this application, an example is used for description. When data is transmitted by using the TBoMS, a quantity of slots occupied by one TB is at least 2. For example, as shown in FIG. 8a, FIG. 8a is a schematic diagram of transmitting data by using a TBoMS. In the schematic diagram, one TB occupies three slots, that is, a PUSCH used to carry the TB occupies three slots. Correspondingly, as shown in FIG. 8b, FIG. 8b is a schematic diagram of transmitting a TB based on a single slot. To be specific, one TB occupies one slot for transmission, that is, a PUSCH used to carry the TB occupies one slot. Therefore, a difference between transmitting a TB by using a TBoMS and transmitting a TB based on a single slot manner lies in that a quantity of slots occupied by one TB is different.

It should be noted that, when data is transmitted by using the TBoMS, a quantity of slots occupied by one TB is different from a quantity of slots occupied by one TB during repeated data transmission, but meanings of the two are completely different. For example, FIG. 8c is a schematic diagram of a TB occupying a plurality of slots during repeated data transmission. In the schematic diagram, one TB also occupies three slots, but each slot is used to transmit one complete TB. That is, the slot1, the slot2, and the slot3 are each used to transmit the TB once, which is equivalent to that the TB is transmitted three times. However, in the example shown in FIG. 8a, the slot1, the slot2, and the slot3 are jointly used to transmit one TB, and the TB is transmitted only once. In a case in which data is transmitted by using the TBoMS described in this application, that a TB occupies a plurality of slots, and that a TB occupies a plurality of slots during repeated data transmission are of completely different meanings and should be distinguished.

Currently, when repeated transmission of uplink data is performed on a PUSCH based on transmission of a TB over a single slot, a maximum quantity of repetitions that can be supported is 16, and a subsequent quantity of repetitions that can be supported may be greater, for example, 32 and 40. However, the receive end combines, demodulates, and decodes the data only after receiving all repeatedly transmitted data. As a result, a signal receiving delay of the receive end is very long. In addition, when data is repeatedly transmitted by using a TBoMS, because one TB occupies a plurality of slots, when the TB is repeatedly transmitted, a signal receiving delay of the receive end is longer.

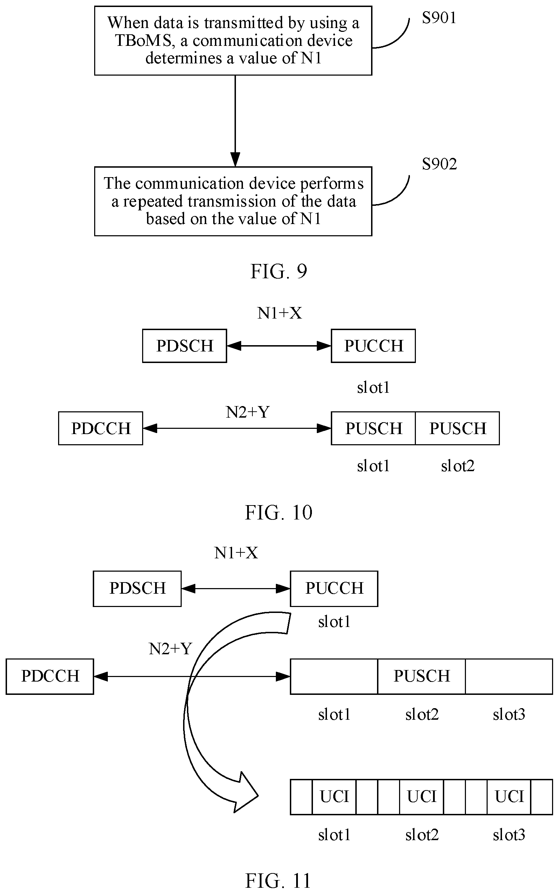

To resolve the foregoing technical problem, this application provides a transmission method. As shown in FIG. 9, the method includes the following steps.

S901. When data is transmitted by using a TBoMS, a communication device determines a value of a maximum allowed quantity of repetitions N1.

The communication device may be a network device, or may be a terminal device.

N1, N2, and N meet a preset condition, N1 is a maximum quantity of repetitions allowed when data is repeatedly transmitted by using a TBoMS and N1 $\geq$ 1, N1 is an integer. N2 indicates a quantity of slots occupied by one transport block TB when the data is transmitted by using the TBoMS, where N2 $\geq$ 2, N2 is an integer, N is a preset value, and N is a positive integer.

Optionally, a value of N may be a preconfigured value, or may be a maximum allowed quantity of repetitions when data is repeatedly transmitted through a PUSCH and/or a physical downlink shared channel (physical downlink shared channel, PDSCH) based on transmission of a TB over a single slot specified in a current protocol, for example, 16, 32, or 40. This is not specifically limited in this application.

For example, the preset condition may be N1 * N2 $\leq$ N.

For example, if the value of N2 is 4, and the value of N is 16, the value of N1 should be less than or equal to 16/4, that is, the value of N1 should be less than or equal to 4. Because N1 $\geq$ 1, N1 is an integer, the value of N1 may be 1, 2, 3, or 4.

For another example, if the value of N2 is 3, and the value of N is 16, the value of N1 should be less than or equal to 16/3. In this case, a manner of rounding down to the nearest integer may be used, and the value of N1 may be 1, 2, 3, 4, or 5.

S902. The communication device performs a repeated transmission of the data based on the value of N1.

Based on the foregoing technical solution, the maximum quantity of repetitions allowed when the data is repeatedly transmitted by using the TBoMS is limited, to avoid an excessively large quantity of repetitions and reduce a signal receiving delay of a receive end.

When the communication device is a terminal device, the terminal device may determine, in the following method, to transmit data by using the TBoMS.

Method 1: A network device sends a first message to the terminal device, and correspondingly, the terminal device receives the first message. The first message indicates the terminal device to transmit data by using a TBoMS.

It should be noted that, when the terminal device determines, in the foregoing method 1, to transmit the data by using the TBoMS, to facilitate the terminal device to transmit the data by using the TBoMS, the network device further needs to send a second message to the terminal device, and indicate a value of N2 to the terminal device by using the second message.

Therefore, the terminal device may determine, based on a direct indication of the network device, to transmit the data by using the TBoMS.

It should be noted that, a sending sequence of the first message and the second message is not limited in this application. The network device may send the first message and the second message to the terminal device at the same time, or may send the first message and the second message in sequence.

Method 2: A network device sends a third message to the terminal device, and correspondingly, the terminal device receives the third message. The third message includes a value of N2, and N2$\geq$2.

Therefore, the terminal device may determine, based on the value of N2, to transmit data by using a TBoMS. In other words, the terminal device determines, based on an implicit indication of the network device, to transmit the data by using the TBoMS.

Based on this, the terminal device may determine the value of N1 in the following method A and method B.

Method A: The network device sends a fourth message to the terminal device, and correspondingly, the terminal device receives the fourth message. The fourth message indicates a value of N1.

The network device may determine the value of N1 based on a value of N2 and a value of N.

For example, the value of N1 meets: N1 = N/N2. For example, the network device obtains the value of N1 through calculation based on N1 = N/N2. The network device directly sends the determined value of N1 to the terminal device. Therefore, the terminal device is notified of the value of N1 in this manner of a direct indication by the network device.

Method B:

Step 1: A terminal device determines a value of N2.

When the terminal device determines, in the foregoing method 1, to transmit data by using the TBoMS, the network device sends a second message to the terminal device, and correspondingly, the terminal device receives the second message, where the second message is used to notify the terminal device of the value of N2. Therefore, the terminal device may determine the value of N2.

When the terminal device determines, in the foregoing manner 2, to transmit the data by using the TBoMS, the terminal device may directly determine the value of N2 based on a third message.

Step 2: The terminal device determines a value of N.

In a possible design, the value of N is pre-configured by the terminal device, or specified in a protocol.

In another possible design, the terminal device determines the value of N based on received network device signaling.

Step 3: The terminal device determines the value of N1 based on the value of N2 and the value of N.

Optionally, the value of N1 meets: N1 = N/N2. For example, the terminal device may obtain the value of N1 through calculation based on N1 = N/N2.

It should be noted that, a sequence of performing step 1 and step 2 in the foregoing method B may be interchanged, or may be performed simultaneously. This is not specifically limited in this application.

It should be noted that, a quantity of actual repetitions performed by the terminal device when the terminal device repeatedly transmits the data may be N1, or may be a value less than N1. After determining the value of N1 in the foregoing manner, the terminal device may further receive a quantity of actual repetitions N1' from the network device, so that the terminal device performs repeated data transmission by using N1'.

When the communication device is a network device, the network device may indicate, in the following manner, the terminal device to transmit data by using the TBoMS.

Method 1: A network device sends a first message to the terminal device, and correspondingly, the terminal device receives the first message. The first message indicates the terminal device to transmit data by using a TBoMS.

It should be noted that, when the terminal device determines, in the foregoing method 1, to transmit the data by using the TBoMS, to facilitate the terminal device to transmit the data by using the TBoMS, the network device further needs to send a second message to the terminal device, and indicate a value of N2 to the terminal device by using the second message.

Therefore, the network device may separately indicate, by using two messages, the terminal device to transmit the data and the value of N2 by using the TBoMS.

It should be noted that, a sending sequence of the first message and the second message is not limited in this application. The network device may send the first message and the second message to the terminal device at the same time, or may send the first message and the second message in sequence.

Method 2: The network device sends a third message to the terminal device, and correspondingly, the terminal device receives the third message. The third message includes a value of N2, and N2≥2.

Therefore, the network device may send only one message to the terminal device, where the message includes the value of N2, to indirectly indicate the terminal device to transmit the data by using the TBoMS.

Based on this, the network device may further indicate the value of N1 to the terminal device in the following manner.

The network device sends a fourth message to the terminal device, and correspondingly, the terminal device receives the fourth message. The fourth message indicates a value of N1.

The network device may determine the value of N1 based on a value of N2 and a value of N.

For example, the value of N1 meets: N1 = N/N2. For example, the network device obtains the value of N1 through calculation based on N1=N/N2. The network device directly sends the determined value of N1 to the terminal device. Therefore, the terminal device is notified of the value of N1 in this manner of direct indication by the network device.

Optionally, the first message, the second message, the third message, and the fourth message in embodiments of this application may be implemented in a manner of signaling. The signaling may be downlink control information (downlink control information, DCI) or radio resource control (radio resource control, RRC), or a combination of DCI and RRC, or the like. This is not limited in this application.

Currently, in 5G new radio (new radio, NR), to send uplink control information (uplink control information, UCI) as early as possible, to implement a relatively low UCI receiving delay, UCI multiplexing is supported.

As shown in FIG. 10, FIG. 10 is a schematic diagram of UCI multiplexing in the current technology.

In the example shown in FIG. 10, a physical downlink control channel (physical downlink control channel, PDCCH) carries downlink control information (downlink control information, DCI) for scheduling a PUSCH to uplink data. That is, after receiving the DCI signaling sent by the network device through the PDCCH, the terminal device transmits the uplink data through the scheduled PUSCH. A time interval between receiving the DCI signaling by the terminal device through the PDCCH and sending the uplink data through the PUSCH needs to be greater than or equal to N2+Y The time interval may also be referred to as a switching time interval, that is, preparation time of sending the PUSCH by the terminal device after receiving the information for scheduling PUSCH sending. N2 is a quantity of time domain symbols related to capability levels of the terminal device (for example, UE capability 1 and UE capability 2), and Y is a predetermined value.

After receiving the downlink data sent by the network device through the PDSCH, the terminal device needs to perform acknowledgment (acknowledgment, ACK) or negative acknowledgment (negative acknowledgment, NACK) feedback in time, and the feedback is reported by using UCI signaling in a physical uplink control channel (physical uplink control channel, PUCCH). Similarly, after receiving the downlink data sent on the PDSCH, the terminal device needs to wait for a time interval of N1 + X, and then sends the UCI signaling through the PUCCH.

In the UCI multiplexing mechanism shown in FIG. 10, when a condition is met that a time interval between receiving through the PUCCH and sending through the PUSCH is greater than or equal to N2+Y described above, and a time interval between receiving through the PDSCH and sending through the PUCCH greater than or equal to the time interval of N1 + X described above, if the time for sending UCI through PUCCH is the same as the time for sending uplink data through PUSCH, that is, when the slot for sending UCI through PUCCH conflicts with the slot for sending uplink data through PUSCH, the UCI to be sent through PUCCH is usually multiplexed into the slot of the conflicting PUSCH for transmission. As shown in FIG. 10, UCI needs to be sent in a slot1 on a PUCCH, and uplink data also needs to be sent in a slot1 on a PUSCH, slots of the PUCCH and the PUSCH conflict. In an existing multiplexing mechanism, the UCI is transmitted by using a slot of the PUSCH, so that the UCI can be sent as soon as possible. A relatively low transmission delay is achieved.

As shown in FIG. 11, FIG. 11 is yet another schematic diagram of UCI multiplexing in the current technology.

In a case in which data is transmitted by using the TBoMS, there may be a slot conflict between a PUCCH and a PUSCH that occupies a plurality of slots. As shown in FIG. 11, a PUCCH conflicts with a PUSCH that occupies three slots. In an existing possible mechanism of UCI multiplexing, UCI to be sent through the PUCCH is evenly divided into three parts, and is transmitted in three slots occupied by the PUSCH. In this multiplexing mode, diversity gains can be obtained in terms of time. This prevents the UCI signals carried on a channel from being of poor quality to not be received at the receive end due to severe channel fading in a slot. However, the receiving end (for example, the base station) can correctly decode and transcode the UCI only after receiving all the UCI on the three slots. Therefore, the multiplexing mechanism increases a delay of demodulation and decoding of the UCI.

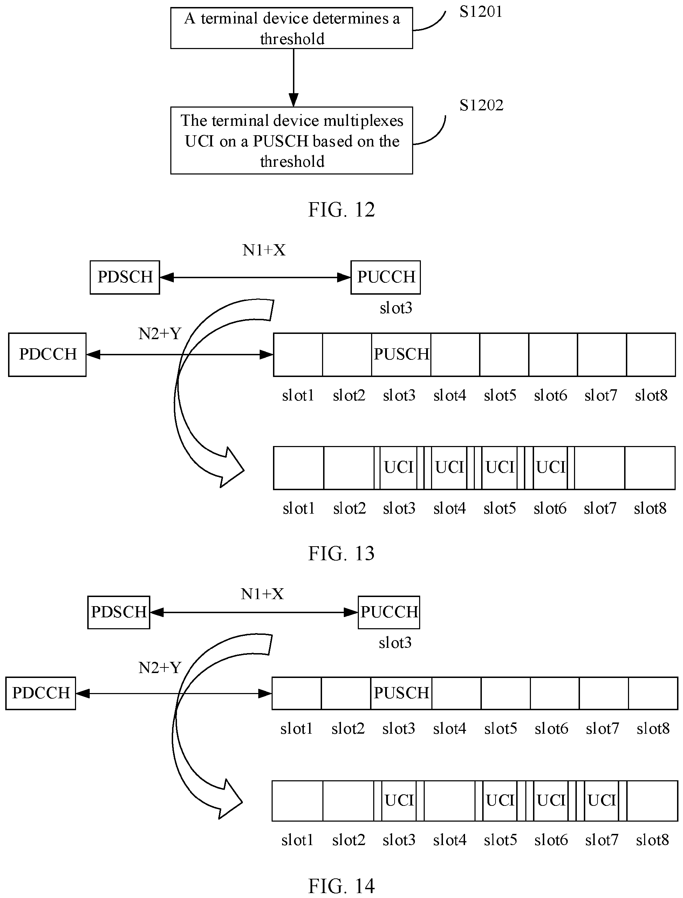

To resolve the foregoing technical problem, this application provides a transmission method. As shown in FIG. 12, the method includes the following steps.

S1201. A terminal device determines a threshold.

In a possible design, the threshold may be predefined.

In another possible design, the threshold may be indicated by the network device. Specifically, the terminal device determines the threshold based on received signaling from the network device. The signaling may be infinite resource control (radio resource control, RRC) signaling or DCI signaling. This is not limited in this application.

Optionally, the threshold may be 4, or the threshold may be another possible value. This is not limited in this application.

S1202. The terminal device multiplexes UCI on a PUSCH based on the threshold.

The PUSCH occupies a plurality of slots, and a quantity of slots over which the terminal device multiplexes the UCI is greater than or equal to 2 and less than or equal to the threshold.

It should be noted that, a scenario of UCI multiplexing is not limited in this application. The scenario may be UCI multiplexing when data transmission is performed by using a TBoMS, or may be UCI multiplexing when repeated data transmission is performed.

For example, in a scenario of UCI multiplexing when data transmission is performed by using a TBoMS, when the terminal device transmits data by using the TBoMS, the threshold may be less than or equal to a quantity of slots occupied by the TBoMS. That is, a quantity of slots occupied by one TB transmitted by using the TBoMS, that is, a quantity of slots occupied by a PUSCH used to carry the TB. It is assumed that when data is transmitted by using the TBoMS, a quantity of slots occupied by one TB is 8, and the threshold may be 4.

For another example, in a scenario of UCI multiplexing when data transmission is performed by using a TBoMS, when the terminal device transmits data by using the TBoMS, the threshold may be greater than a quantity of slots occupied by the TBoMS. That is, a quantity of slots occupied by one TB transmitted by using the TBoMS, that is, a quantity of slots occupied by a PUSCH used to carry the TB. It is assumed that when data is transmitted by using the TBoMS, a quantity of slots occupies by one TB is 3, and the threshold may also be 4. In this case, an actual quantity of slots occupied by the terminal device when performing UCI multiplexing may be 2, which meets a condition that the quantity is less than or equal to the threshold. However, in the current technology, in this case, an actual quantity of slots occupied by the terminal device when performing UCI multiplexing is 3, that is, the quantity of slots is the same as that occupied by one TB. Therefore, in this scenario, according to the technical solution provided in embodiments of this application, a delay of demodulation and decoding of the UCI can also be reduced.

For another example, in a scenario of UCI multiplexing during repeated data transmission, when the terminal device performs repeated data transmission, the threshold should be less than or equal to a quantity of retransmission times. For example, if a TB is retransmitted eight times, a quantity of slots occupied by the TB is 8, that is, a quantity of slots occupied by a PUSCH used to carry the TB is 8. In this case, the threshold should be less than or equal to 8.

Based on the foregoing technical solution, the terminal device multiplexes the UCI on a quantity of slots less than or equal to a threshold, thereby reducing a delay of demodulation and decoding of the UCI.

It should be noted that, a quantity of slots actually multiplexed when the terminal device performs UCI multiplexing, and how the terminal device determines the quantity of slots actually multiplexed are not limited in this application.

For ease of understanding the solutions in embodiments of this application, the following uses an example for description. For example, it is assumed that a quantity of slots occupied when uplink data is transmitted on a PUSCH by using the TBoMS is 8, and when a sending slot of the PUCCH and a sending slot of the PUSCH conflict, according to the multiplexing mechanism shown in FIG. 11, UCI sent through the PUCCH is evenly divided into eight parts, and the eight parts are transmitted in eight slots of the PUSCH. However, according to the method shown in FIG. 12 provided in this application, the UCI sent through the PUCCH may be transmitted in a quantity of slots that are of the PUSCH and that are less than or equal to the threshold.

It is used as an example for illustration that a quantity of slots occupied by a PUSCH for transmitting data by using a TBoMS is 8, a threshold is 4, and a quantity of slots in which the UCI is multiplexed is equal to 4, a conflict slot in which the DCI is sent through the PUCCH and the uplink data is sent through the PUSCH is a slot3.

As shown in FIG. 13, FIG. 13 is a schematic diagram of UCI multiplexing according to this application. In the schematic diagram, slots occupied by UCI multiplexing are slot3, slot4, slot5, and slot6. The slot3 is a slot conflicting with the UCI, that is, occupies four consecutive slots including a current conflicting slot.

As shown in FIG. 14, FIG. 14 is yet another schematic diagram of UCI multiplexing according to an embodiment of this application. In the schematic diagram, slots occupied by UCI multiplexing are slot3, slot5, slot6, and slot7.

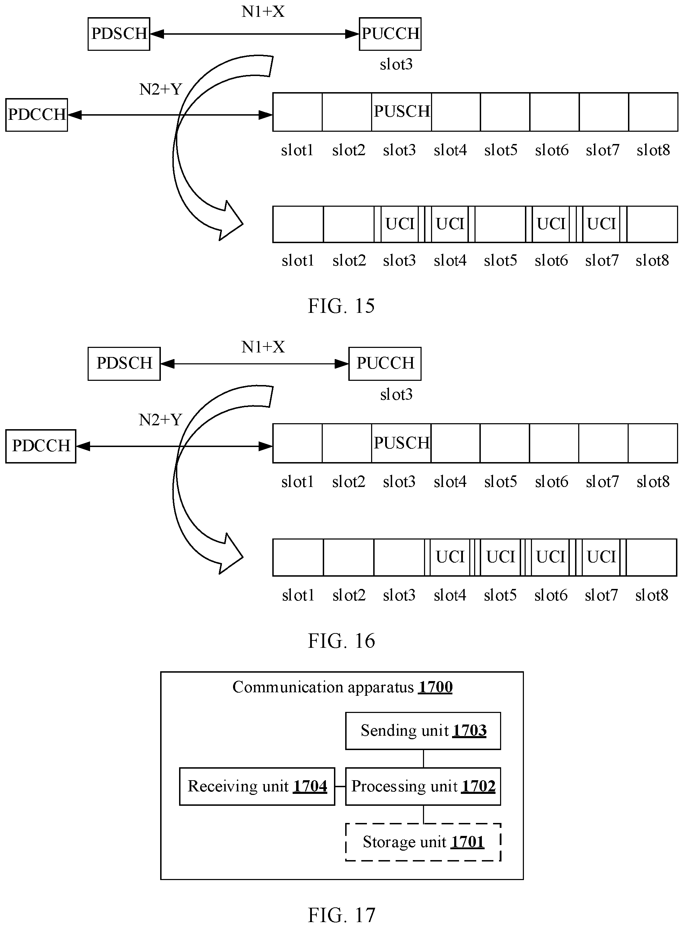

As shown in FIG. 15, FIG. 15 is yet another schematic diagram of UCI multiplexing according to an embodiment of this application. In the schematic diagram, slots occupied by UCI multiplexing are slot3, slot4, slot6, and slot7.

As shown in FIG. 16, FIG. 16 is yet another schematic diagram of UCI multiplexing according to an embodiment of this application. In the schematic diagram, slots occupied by UCI multiplexing are slot4, slot5, slot6, and slot7.

It should be understood that the foregoing schematic diagram of a slot occupied by UCI multiplexing is merely an example for description, and constitutes no limitation on embodiments of this application. In addition to the cases shown in FIG. 13, FIG. 14, FIG. 15, and FIG. 16, another occupation manner may be included. In actual application, the setting may be performed based on a requirement. This is not specifically limited in this application. It should be noted that, slots before UCI conflict slot cannot be occupied, for example, slot1 and slot2, because uplink data has been sent on the PUSCH based on the slot, the slot cannot be reused.

The foregoing mainly describes the solutions provided in embodiments of this application from a perspective of interaction between the network elements. Correspondingly, an embodiment of this application further provides a communication apparatus. The communication apparatus may be the network element in the foregoing method embodiment, an apparatus including the foregoing network element, or a component that can be used in a network element. It may be understood that, to implement the foregoing functions, the communication apparatus includes a hardware structure and/or a software module for performing a corresponding function. A person skilled in the art should easily be aware that the units and algorithm steps in the examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

As a possible embodiment, FIG. 17 is a schematic diagram of a structure of a communication apparatus 1700. The communication apparatus 1700 includes a processing unit 1702, a sending unit 1703, and a receiving unit 1704.

For example, that the communication apparatus 1700 includes the communication device (for example, a terminal device or a network device) in FIG. 4 in the foregoing method embodiment is used as an example. The processing unit 1702 is configured to determine a target resource of a first actual repetition, where the first actual repetition is one of at least two actual repetitions included in a first nominal repetition, and a quantity of frequency domain resource units of the target resource is greater than a quantity of frequency domain resource units of the first nominal repetition. The sending unit 1703 is configured to send the first actual repetition on the target resource. Alternatively, the receiving unit 1704 is configured to receive the first actual repetition on the target resource.

In a possible design, the first actual repetition meets at least one of the following preset conditions.

In a first item, a quantity of time domain resource units corresponding to the first actual repetition is less than a first threshold.

In a second item, a bit rate corresponding to the first actual repetition is greater than a second threshold.

In a possible design, the first threshold is a preset threshold of the quantity of time domain resource units. Alternatively, the first threshold is a threshold of the quantity of time domain resource units indicated by first signaling, and the first signaling is, when the communication apparatus 1700 is a terminal device, signaling received by the terminal device from a network device.

In a possible design, the first threshold is $a_1$ times a quantity of time domain resource units configured for the first nominal repetition, where $a_1$ is predefined or pre-configured, and $0<a_1<1$.

In a possible design, the second threshold is a preset bit rate threshold. Alternatively, the second threshold is a bit rate threshold indicated by the second signaling. The second signaling is, when the communication apparatus 1700 is a terminal device, signaling received by the terminal device from a network device.

In a possible design, the second threshold is $a_2$ times a bit rate configured for the first nominal repetition, where $a_2$ is predefined or pre-configured, and $a_2>1$.

In a possible design, the first actual repetition meets at least one of the following preset conditions.

In the first item, a quantity of time domain resource units corresponding to the first actual repetition is a minimum quantity of time domain resource units in the at least two actual repetitions.

In a second item, a bit rate corresponding to the first actual repetition is a maximum bit rate in the at least two actual repetitions.

In a possible design, when the communication apparatus 1700 is a terminal device, the sending unit 1703 is further configured to send first capability information to a network device. The first capability information indicates a capability of the terminal device to expand the frequency domain resource unit.

In a possible design, the quantity of frequency domain resource units of the target resource is determined based on the quantity of frequency domain resource units of the first nominal repetition and a target expansion factor. The target expansion factor indicates an adjustment proportion of the quantity of frequency domain resource units of the first nominal repetition.

In a possible design, the quantity of frequency domain resource units of the target resource meets:

$$M = [N \times k]$$

M represents the quantity of frequency domain resource units of the target resource, *N* represents the quantity of frequency domain resource units of the first nominal repetition, *k* represents the target expansion factor, and [ ] represents a rounding operator.

In a possible design, the target expansion factor is a first expansion factor. The first expansion factor is a ratio of the quantity of time domain resource units of the first nominal repetition to the quantity of time domain resource units of the target resource.

In a possible design, the target expansion factor is a value determined based on a first expansion factor and a reference factor. The first expansion factor is a ratio of the quantity of time domain resource units of the first nominal repetition to the quantity of time domain resource units of the target resource. The reference factor includes at least one of the following.

The first item is a second expansion factor. The second expansion factor is a ratio of the quantity of time domain resource units of the first nominal repetition to a quantity of time domain resource units of a second actual repetition, and the second actual repetition belongs to the at least two actual repetitions, and is different from the first actual repetition.

The second item is a preset value.

In a possible design, the quantity of frequency domain resource units of the target resource is a value determined based on a quantity of first frequency domain resource units and a quantity of reference frequency domain resource units. The quantity of first frequency domain resource units is determined based on the quantity of frequency domain resource units of the first nominal repetition and a first expansion factor, and the first expansion factor is a ratio of the quantity of time domain resource units of the first nominal repetition to the quantity of time domain resource units of the target resource. The quantity of reference frequency domain resource units includes at least one of the following.

The first item is a quantity of second frequency domain resource units. The quantity of second frequency domain resource units is determined by the quantity of frequency domain resource units of the second nominal repetition and a second expansion factor, and the second expansion factor is a ratio of the quantity of time domain resource units of the first nominal repetition to a quantity of time domain resource units of a second actual repetition; and the second actual repetition belongs to the at least two actual repetitions, and is different from the first actual repetition.

The second item is the quantity of frequency domain resource units of the first nominal repetition.

In a possible design, when the communication apparatus 1700 is a terminal device, the receiving unit 1704 is further configured to receive third signaling from a network device. The third signaling indicates that at least two repeated transmissions perform joint channel estimation, the at least two repeated transmissions include the first actual repetition, and the two repeated transmissions have a same quantity of frequency domain resource units.

In a possible design, the sending unit 1703 is further configured to send second capability information to a network device. The second capability information indicates that the terminal device supports the joint channel estimation.

In a possible design, the quantity of time domain resource units includes a quantity of time domain resource units that carry a transport block TB and a demodulation reference signal DMRS, and the TB is data transmitted by a first repeated transmission. Alternatively, the quantity of time domain resource units includes a quantity of time domain resource units that carry the TB, but does not include a quantity of time domain resource units that carry the DMRS.

For example, the communication apparatus includes the communication device (for example, a terminal device or a network device) in FIG. 9 in the foregoing method embodiment. The processing unit 1702 is configured to determine a value of N1 when data is transmitted by using a transport block over multiple slots TBoMS. N1, N2, and N meet a preset condition, where N1 is a maximum quantity of repetitions allowed when data is repeatedly transmitted by using a TBoMS, where N1>1, and N1 is an integer, and N2 indicates a quantity of slots occupied by one transport block TB when data is transmitted by using the TBoMS, where N2≥2, N is an integer, N is a preset value, and N is a positive integer. The processing unit 1702 is further configured to perform a repeated transmission of the data based on the value of N1.

In a possible design, the preset condition is: N1*N2≤N.

In a possible design, N is a maximum quantity of repetitions allowed when data is repeatedly transmitted on a physical uplink shared channel PUSCH and/or a physical downlink shared channel PDSCH based on transmission of a TB over a single slot.

In a possible design, the communication apparatus 1700 is a terminal device. The receiving unit 1704 is configured to receive a first message from a network device, where the first message indicates the terminal device to transmit data by using a TBoMS. The receiving unit 1704 is further configured to receive a second message from the network device, where the second message is used to notify the terminal device of a value of N2.

In a possible design, the communication apparatus 1700 is a terminal device. The receiving unit 1704 is configured to receive a third message from a network device, where the third message includes the value of N2. The processing unit 1702 is further configured to determine based on the value of N2, to transmit data by using a TBoMS.

In a possible design, the processing unit 1702 is specifically configured to determine the value of N1 based on the value of N2 and the value of N, where N1 meets: N1=N/N2.

In a possible design, the processing unit 1702 is further configured to determine a value of N.

In a possible design, the receiving unit 1704 is further configured to receive a fourth message from a network device, and the fourth message indicates the value of N1.

In a possible design, the communication apparatus 1700 is a network device. The sending unit 1703 is configured to send a first message to a terminal device, where the first message indicates the terminal device to transmit data by using a TBoMS. The sending unit 1703 is further configured to send a second message to the terminal device, where the second message is used to notify the terminal device of a value of N2.

In a possible design, the communication apparatus 1700 is a network device. The sending unit 1703 is configured to send a third message to a terminal device, where the third message includes the value of N2. The value of N2 indicates that the terminal device transmits data by using the TBoMS.

In a possible design, the processing unit 1702 is specifically configured to determine the value of N1 based on the value of N2 and the value of N, where N1 meets: N1=N/N2.

In a possible design, the sending unit 1703 is further configured to send a fourth message to a terminal device, and the fourth message indicates the value of N1.

For example, the communication apparatus includes the terminal device in FIG. 12 in the foregoing method embodiment. The processing unit 1702 is configured to determine a threshold. The processing unit 1702 is further configured to multiplex uplink control information UCI on a physical uplink shared channel PUSCH based on the threshold. The PUSCH occupies a plurality of slots, and a quantity of slots over which the processing unit multiplexes the UCI is greater than or equal to 2 and less than or equal to the threshold. The sending unit 1703 and the receiving unit 1704 are configured to communicate with another device by the terminal device.

In a possible design, the threshold is a preset value. Alternatively, the threshold is indicated by a network device.

In a possible design, the threshold is 4.

It should be understood that the processing unit 1702 in this embodiment of this application may be implemented by a processor or a circuit component related to a processor, the sending unit 1703 may be implemented by a circuit component related to a transmitter, and the receiving unit 1704 may be implemented by a circuit component related to a receiver.

Optionally, the communication apparatus 1700 may further include a storage unit 1701, configured to store program code and data of the communication apparatus 1700. The data may include but is not limited to original data, intermediate data, or the like.

The processing unit 1702 may be at least one processor or controller, for example, may be a central processing unit (central processing unit, CPU), a general purpose processor, a digital signal processor (digital signal processor, DSP), or an application specific integrated circuit (application specific integrated circuit, ASIC), field programmable gate array (field programmable gate array, FPGA) or another programmable logic device, transistor logic device, hardware component, or any combination thereof. The processing module may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor.

The sending unit 1703 may include a communication interface, a transmitter, a sending circuit, or the like. The receiving unit 1704 may include a communication interface, a receiver, a receiving circuit, or the like. The communication interface is a general term. In a specific implementation, the communication interface may include a plurality of interfaces.

The storage unit 1701 may include a memory.

As another possible embodiment, an embodiment of this application provides a chip. The chip includes a logic circuit and an input/output interface. The input/output interface is configured to communicate with a module other than the chip, and the logic circuit is configured to perform other operations on the terminal device in the foregoing method embodiments except a sending and receiving operation.

For example, that the chip is implemented as a function of the terminal device in FIG. 4 in the foregoing method embodiment is used as an example, the input/output interface performs S401, S405, or S409 on the terminal device side, and/or the input/output interface is further configured to perform another receiving and sending step on the terminal device side in this embodiment of this application. The logic circuit is configured to perform S402, S403, and S404 on the terminal device side in embodiments of this application, and/or the logic circuit is further configured to perform another processing step on the terminal device side in this embodiment of this application.

For example, that the chip is implemented as a function of the network device in FIG. 4 in the foregoing method embodiment is used as an example, the input/output interface performs S401, S405, or S409 on the network device side, and/or the input/output interface is further configured to perform another receiving and sending step on the network device side in embodiments of this application. The logic circuit is configured to perform S402, S403, and S404 on the network device side in this embodiment of this application, and/or the logic circuit is further configured to perform other processing steps on the network device side in this embodiment of this application.

For example, that the chip is implemented as a function of the terminal device in FIG. 9 in the foregoing method embodiment is used as an example, the input/output interface is configured to receive the first message, the second message, the third message, the fourth message, and the like from a network device, and/or the input/output interface is further configured to perform another receiving and sending step on the terminal device side in embodiments of this application. The logic circuit is configured to perform S901 and S902 on the terminal device side in embodiments of this application, and/or the logic circuit is further configured to perform another processing step on the terminal device side in embodiments of this application.

For example, that the chip is implemented as a function of the network device in FIG. 9 in the foregoing method embodiments is used as an example, the input/output interface is configured to send the first message, the second message, the third message, the fourth message, and the like to the terminal device, and/or the input/output interface is further configured to perform another receiving and sending step on the network device side in embodiments of this application. The logic circuit is configured to perform S901 and S902 on the network device side in embodiments of this application, and/or the logic circuit is further configured to perform another processing step on the network device side in this embodiment of this application.

For example, that the chip is implemented as a function of the terminal device in FIG. 12 in the foregoing method embodiments is used as an example, the input/output interface is configured to communicate with another device by the terminal device, and/or the input/output interface is further configured to perform another receiving and sending step on a terminal device side in embodiments of this application. The logic circuit is configured to perform S1201 and S1202 on the terminal device side in embodiments of this application, and/or the logic circuit is further configured to perform another processing step on the terminal device side in this embodiment of this application.

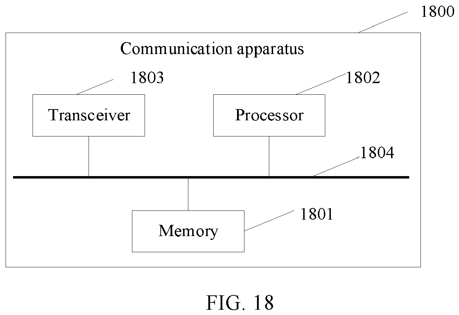

When the processing unit 1702 includes a processor, the sending unit 1703 includes a communication interface, the receiving unit 1704 includes a communication interface, and the storage unit 1701 includes a memory, the communication apparatus 1800 in embodiments of this application may be shown in FIG. 18.

Referring to FIG. 18, the communication apparatus 1800 includes: a processor 1802, a transceiver 1803, and a memory 1801.

The transceiver 1803 may be an independently disposed transmitter, and the transmitter may be configured to send information to another device. Alternatively, the transceiver may be an independently disposed receiver, and is configured to receive information from another device. Alternatively, the transceiver may be a component that integrates functions of sending and receiving information. Specific implementation of the transceiver is not limited in embodiments of this application.

Optionally, the communication apparatus 1800 may further include a bus 1804. The transceiver 1803, the processor 1802, and the memory 1801 may be connected to each other by using the bus 1804. The bus 1804 may include a peripheral component interconnect (peripheral component interconnect, PCI) bus, an extended industry standard architecture (extended industry standard architecture, EISA) bus, or the like. The bus 1804 may be classified into an address bus, a data bus, a control bus, and the like. For ease of representation, only one bold line is for representing the bus in FIG. 18, but this does not mean that there is only one bus or only one type of bus.

A person of ordinary skill in the art may understand that: All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may include a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may include any usable medium accessible by the computer, or include a data storage device, for example, a server or a data center, integrating one or more usable media. The usable medium may include a magnetic medium (for example, a floppy disk, a hard disk, or a magnetic tape), an optical medium (for example, digital video disc (digital video disc, DVD)), or a semiconductor medium (for example, a solid state disk (solid state disk, SSD)), or the like.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network devices. Some or all of the units may be selected based on actual requirements to achieve the objectives of the solutions of embodiments.

In addition, functional units in embodiments of this application may be integrated into one processing unit, or each of the functional units may exist independently, or two or more units may be integrated into one unit. The integrated unit may be implemented through hardware, or may also be implemented in a form of hardware plus a software functional unit.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially, or the part contributing to the current technology, or some of the technical solutions may be implemented in a form of a software product. The computer software product is stored in a readable storage medium, such as a floppy disk, a hard disk, or an optical disc of a computer, and includes several instructions for instructing a computer device (which may include a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A transmission method, comprising:

    determining, by a communication device, a target resource of a first actual repetition, wherein the first actual repetition is one of at least two actual repetitions comprised in a first nominal repetition, and a quantity of frequency domain resource units of the target resource is greater than a quantity of frequency domain resource units of the first nominal repetition; and
    sending or receiving, by the communication device, the first actual repetition on the target resource.

2. The method according to claim 1, wherein the first actual repetition meets at least one of the following preset conditions:

    a quantity of time domain resource units corresponding to the first actual repetition is less than a first threshold; and
    a bit rate corresponding to the first actual repetition is greater than a second threshold.

3. The method according to claim 2, wherein

   the first threshold is a preset threshold of the quantity of time domain resource units; or
   the first threshold is a threshold of the quantity of time domain resource units indicated by first signaling, and
   the first signaling is, when the communication device is a terminal device, signaling received by the terminal
   device from a network device.

4. The method according to claim 2, wherein the first threshold is $a_1$ times a quantity of time domain resource units configured for the first nominal repetition, wherein $a_1$ is predefined or pre-configured, and $0 < a_1 < 1$.

5. The method according to claim 2, wherein

   the second threshold is a preset bit rate threshold; or
   the second threshold is a bit rate threshold indicated by second signaling, wherein the second signaling is, when
   the communication device is a terminal device, signaling received by the terminal device from a network device.

6. The method according to claim 2, wherein the second threshold is $a_2$ times a bit rate configured for the first nominal repetition, wherein $a_2$ is predefined or pre-configured, and $a_2 > 1$.

7. The method according to claim 1, wherein the first actual repetition meets at least one of the following preset conditions:

   a quantity of time domain resource units corresponding to the first actual repetition is a minimum quantity of
   time domain resource units in the at least two actual repetitions; and
   a bit rate corresponding to the first actual repetition is a maximum bit rate in the at least two actual repetitions.

8. The method according to any one of claims 1 to 7, wherein when the communication device is the terminal device, the method further comprises:
   sending, by the terminal device, first capability information to the network device, wherein the first capability information indicates a capability of the terminal device to expand the frequency domain resource unit.

9. The method according to any one of claims 1 to 8, wherein the quantity of frequency domain resource units of the target resource is determined based on the quantity of frequency domain resource units of the first nominal repetition and a target expansion factor, wherein
   the target expansion factor indicates an adjustment proportion of the quantity of frequency domain resource units of the first nominal repetition.

10. The method according to claim 9, wherein the quantity of frequency domain resource units of the target resource meets:

$$M = [N \times k]$$

   wherein M represents the quantity of frequency domain resource units of the target resource, N represents the quantity of frequency domain resource units of the first nominal repetition, k represents the target expansion factor, and [ ] represents a rounding operator.

11. The method according to claim 9 or 10, wherein

   the target expansion factor is a first expansion factor, wherein
   the first expansion factor is a ratio of the quantity of time domain resource units of the first nominal repetition
   to a quantity of time domain resource units of the target resource.

12. The method according to claim 9 or 10, wherein

   the target expansion factor is a value determined based on a first expansion factor and a reference factor, wherein
   the first expansion factor is a ratio of the quantity of time domain resource units of the first nominal repetition
   to a quantity of time domain resource units of the target resource; and

the reference factor comprises at least one of the following:

a second expansion factor, wherein the second expansion factor is a ratio of the quantity of time domain resource units of the first nominal repetition to a quantity of time domain resource units of a second actual repetition, and the second actual repetition belongs to the at least two actual repetitions and is different from the first actual repetition; and
a preset value.

**13.** The method according to any one of claims 1 to 8, wherein

the quantity of frequency domain resource units of the target resource is a value determined based on a quantity of first frequency domain resource units and a quantity of reference frequency domain resource units, wherein the quantity of first frequency domain resource units is determined based on the quantity of frequency domain resource units of the first nominal repetition and a first expansion factor, and the first expansion factor is a ratio of the quantity of time domain resource units of the first nominal repetition to a quantity of time domain resource units of the target resource; and
the quantity of reference frequency domain resource units comprises at least one of the following:

a quantity of second frequency domain resource units, wherein the quantity of second frequency domain resource units is determined by the quantity of frequency domain resource units of the second nominal repetition and a second expansion factor, and the second expansion factor is a ratio of the quantity of time domain resource units of the first nominal repetition to a quantity of time domain resource units of a second actual repetition; and the second actual repetition belongs to the at least two actual repetitions, and is different from the first actual repetition; and
the quantity of frequency domain resource units of the first nominal repetition.

**14.** The method according to any one of claims 1 to 13, wherein when the communication device is the terminal device, the method further comprises:
receiving, by the terminal device, third signaling from the network device, wherein the third signaling indicates that at least two repeated transmissions perform joint channel estimation, the at least two repeated transmissions comprise the first actual repetition, and the two repeated transmissions have a same quantity of frequency domain resource units.

**15.** The method according to claim 14, wherein the method further comprises:

sending, by the terminal device, second capability information to the network device, wherein the second capability information indicates that the terminal device supports the joint channel estimation.

**16.** The method according to claim 2, 3, 4, 7, 11, 12, or 13, wherein

the quantity of time domain resource units comprises a quantity of time domain resource units that carry a transport block TB and a demodulation reference signal DMRS, and the TB is data transmitted by a first repeated transmission; or
the quantity of time domain resource units comprises a quantity of time domain resource units that carry the TB, but does not comprise a quantity of time domain resource units that carry the DMRS.

**17.** A communication apparatus, comprising:

a processing unit, configured to determine a target resource of a first actual repetition, wherein the first actual repetition is one of at least two actual repetitions comprised in a first nominal repetition, and a quantity of frequency domain resource units of the target resource is greater than a quantity of frequency domain resource units of the first nominal repetition; and
a sending unit, configured to send the first actual repetition on the target resource; or
a receiving unit, configured to receive the first actual repetition on the target resource.

**18.** The apparatus according to claim 17, wherein the first actual repetition meets at least one of the following preset conditions:

a quantity of time domain resource units corresponding to the first actual repetition is less than a first threshold; and

a bit rate corresponding to the first actual repetition is greater than a second threshold.

19. The apparatus according to claim 18, wherein

the first threshold is a preset threshold of the quantity of time domain resource units; or
the first threshold is a threshold of the quantity of time domain resource units indicated by first signaling, and the first signaling is, when the communication apparatus is a terminal device, signaling received by the terminal device from a network device.

20. The apparatus according to claim 18, wherein the first threshold is $a_1$ times a quantity of time domain resource units configured for the first nominal repetition, wherein $a_1$ is predefined or pre-configured, and $0<a_1<1$.

21. The apparatus according to claim 18, wherein

the second threshold is a preset bit rate threshold; or
the second threshold is a bit rate threshold indicated by second signaling, wherein the second signaling is, when the communication apparatus is a terminal device, signaling received by the terminal device from a network device.

22. The apparatus according to claim 18, wherein the second threshold is $a_2$ times a bit rate configured for the first nominal repetition, wherein $a_2$ is predefined or pre-configured, and $a_2>1$.

23. The apparatus according to claim 17, wherein the first actual repetition meets at least one of the following preset conditions:

a quantity of time domain resource units corresponding to the first actual repetition is a minimum quantity of time domain resource units in the at least two actual repetitions; and
a bit rate corresponding to the first actual repetition is a maximum bit rate in the at least two actual repetitions.

24. The apparatus according to any one of claims 17 to 23, wherein when the communication apparatus is the terminal device, the sending unit is further configured to send first capability information to the network device, and the first capability information indicates a capability of the terminal device to expand the frequency domain resource unit.

25. The apparatus according to any one of claims 17 to 24, wherein the quantity of frequency domain resource units of the target resource is determined based on the quantity of frequency domain resource units of the first nominal repetition and a target expansion factor, wherein
the target expansion factor indicates an adjustment proportion of the quantity of frequency domain resource units of the first nominal repetition.

26. The apparatus according to claim 25, wherein the quantity of frequency domain resource units of the target resource meets:

$$M = [N \times k]$$

wherein M represents the quantity of frequency domain resource units of the target resource, N represents the quantity of frequency domain resource units of the first nominal repetition, $k$ represents the target expansion factor, and [ ] represents a rounding operator.

27. The apparatus according to claim 25 or 26, wherein

the target expansion factor is a first expansion factor, wherein
the first expansion factor is a ratio of the quantity of time domain resource units of the first nominal repetition to a quantity of time domain resource units of the target resource.

28. The apparatus according to claim 25 or 26, wherein

the target expansion factor is a value determined based on a first expansion factor and a reference factor, wherein the first expansion factor is a ratio of the quantity of time domain resource units of the first nominal repetition to a quantity of time domain resource units of the target resource; and

the reference factor comprises at least one of the following:

a second expansion factor, wherein the second expansion factor is a ratio of the quantity of time domain resource units of the first nominal repetition to a quantity of time domain resource units of a second actual repetition, and the second actual repetition belongs to the at least two actual repetitions and is different from the first actual repetition; and

a preset value.

29. The apparatus according to any one of claims 17 to 24, wherein

the quantity of frequency domain resource units of the target resource is a value determined based on a quantity of first frequency domain resource units and a quantity of reference frequency domain resource units, wherein the quantity of first frequency domain resource units is determined based on the quantity of frequency domain resource units of the first nominal repetition and a first expansion factor, and the first expansion factor is a ratio of the quantity of time domain resource units of the first nominal repetition to a quantity of time domain resource units of the target resource; and

the quantity of reference frequency domain resource units comprises at least one of the following:

a quantity of second frequency domain resource units, wherein the quantity of second frequency domain resource units is determined by the quantity of frequency domain resource units of the second nominal repetition and a second expansion factor, and the second expansion factor is a ratio of the quantity of time domain resource units of the first nominal repetition to a quantity of time domain resource units of a second actual repetition; and the second actual repetition belongs to the at least two actual repetitions, and is different from the first actual repetition; and

the quantity of frequency domain resource units of the first nominal repetition.

30. The apparatus according to any one of claims 17 to 29, wherein when the communication apparatus is the terminal device, the receiving unit is further configured to receive third signaling from the network device, the third signaling indicates that at least two repeated transmissions perform joint channel estimation, the at least two repeated transmissions comprise the first actual repetition, and the two repeated transmissions have a same quantity of frequency domain resource units.

31. The apparatus according to claim 30, wherein the sending unit is further configured to send second capability information to the network device, and the second capability information indicates that the terminal device supports the joint channel estimation.

32. A communication apparatus, comprising: a processor and a memory, wherein the processor is coupled to the memory, the memory stores program instructions, and when the program instructions stored in the memory is executed by the processor, the method according to any one of claims 1 to 16 is performed.

33. A transmission method, wherein the method comprises:

determining, by a communication device, a value of N1 when data is transmitted by using a transport block over multiple slots TBoMS, wherein
N1, N2, and N meet a preset condition, N1 is a maximum quantity of repetitions allowed when data is repeatedly transmitted by using the TBoMS, $N1 \geq 1$, N1 is an integer, N2 indicates a quantity of slots occupied by one transport block TB when data is transmitted by using the TBoMS, $N2 \geq 2$, N2 is an integer, N is a preset value, and N is a positive integer; and
performing, by the communication device, a repeated transmission of the data based on the value of N1.

34. The method according to claim 33, wherein the preset condition is: $N1 * N2 \leq N$.

35. The method according to claim 33 or 34, wherein N is a maximum quantity of repetitions allowed when data is repeatedly transmitted on a physical uplink shared channel PUSCH and/or a physical downlink shared channel PDSCH based on transmission of a TB over a single slot.

36. The method according to any one of claims 33 to 35, wherein the communication device is a terminal device; and the method further comprises:

receiving, by the terminal device, a first message from a network device, wherein the first message indicates the terminal device to transmit data by using the TBoMS; and
receiving, by the terminal device, a second message from the network device, wherein the second message is used to notify the terminal device of a value of N2.

37. The method according to any one of claims 33 to 35, wherein the communication device is a terminal device; and the method further comprises:

receiving, by the terminal device, a third message from a network device, wherein the third message comprises a value of N2; and
determining, by the terminal device based on the value of N2, to use the TBoMS to transmit data.

38. The method according to any one of claims 33 to 37, wherein the determining, by the terminal device, a value of N1 comprises:
determining, by the terminal device, the value of N1 based on the value of N2 and a value of N, wherein N1 meets: N1 = N/N2.

39. The method according to claim 38, wherein before the determining, by the terminal device, the value of N1 based on the value of N2 and a value of N, the method further comprises:
determining, by the terminal device, the value of N.

40. The method according to claim 36 or 37, wherein the determining, by the terminal device, a value of N1 comprises:
receiving, by the terminal device, a fourth message from the network device, wherein the fourth message indicates the value of N1.

41. The method according to any one of claims 33 to 35, wherein the communication device is a network device; and the method further comprises:

sending, by the network device, a first message to a terminal device, wherein the first message indicates the terminal device to transmit data by using the TBoMS; and
sending, by the network device, a second message to the terminal device, wherein the second message is used to notify the terminal device of a value of N2.

42. The method according to any one of claims 33 to 35, wherein the communication device is a network device; and the method further comprises:

sending, by the network device, a third message to a terminal device, wherein the third message comprises the value of N2; and
the value of N2 indicates that the terminal device transmits data by using the TBoMS.

43. The method according to claim 41 or 42, wherein the determining, by the network device, a value of N1 comprises:
determining, by the network device, the value of N1 based on a value of N2 and a value of N, wherein N1 meets: N1 = N/N2.

44. The method according to claim 43, wherein after the determining, by the network device, the value of N1 based on the value of N2 and the value of N, the method further comprises:
sending, by the network device, a fourth message to the terminal device, wherein the fourth message indicates the value of N1.

45. A transmission method, wherein the method comprises:

determining, by a terminal device, a threshold; and
multiplexing, by the terminal device, uplink control information UCI on a physical uplink shared channel PUSCH based on the threshold, wherein
the PUSCH occupies a plurality of slots, and a quantity of slots over which the terminal device multiplexes the UCI is greater than or equal to 2 and less than or equal to the threshold.

46. The method according to claim 45, wherein

the threshold is a preset value; or
the threshold is indicated by a network device.

47. The method according to claim 45 or 46, wherein the threshold is 4.

48. A communication apparatus, comprising:

a processing unit, configured to determine a value of N1 when data is transmitted by using a transport block over multiple slots TBoMS, wherein
N1, N2, and N meet a preset condition, N1 is a maximum quantity of repetitions allowed when data is repeatedly transmitted by using the TBoMS, N1≥1, N1 is an integer, N2 indicates a quantity of slots occupied by one transport block TB when data is transmitted by using the TBoMS, N2≥2, N is an integer, N is a preset value, and N is a positive integer, wherein
the processing unit is further configured to perform a repeated transmission of the data based on the value of N1.

49. The communication apparatus according to claim 48, wherein the preset condition is: N1*N2≤N.

50. The communication apparatus according to claim 48 or 49, wherein N is a maximum quantity of repetitions allowed when data is repeatedly transmitted on a physical uplink shared channel PUSCH and/or a physical downlink shared channel PDSCH based on transmission of a TB over a single slot.

51. The communication apparatus according to any one of claims 48 to 50, wherein the communication apparatus is a terminal device; and the communication apparatus further comprises a receiving unit, wherein

the receiving unit is configured to receive a first message from a network device, and the first message indicates the terminal device to transmit data by using the TBoMS; and
the receiving unit is further configured to receive a second message from the network device, and the second message is used to notify the terminal device of a value of N2.

52. The communication apparatus according to any one of claims 48 to 50, wherein the communication apparatus is a terminal device; and the communication apparatus further comprises a receiving unit, wherein

the receiving unit is configured to receive a third message from a network device, and the third message comprises a value of N2; and
the processing unit is further configured to determine, based on the value of N2, to use the TBoMS to transmit data.

53. The communication apparatus according to any one of claims 48 to 52, wherein
the processing unit is specifically configured to determine the value of N1 based on a value of N2 and a value of N, wherein N1 meets: N1 = N/N2.

54. The communication apparatus according to claim 53, wherein
the processing unit is further configured to determine the value of N.

55. The communication apparatus according to claim 51 or 52, wherein
the receiving unit is further configured to receive a fourth message from the network device, and the fourth message indicates the value of N1.

56. The communication apparatus according to any one of claims 48 to 50, wherein the communication apparatus is a network device; and the communication apparatus further comprises a sending unit, wherein

the sending unit is configured to send a first message to a terminal device, and the first message indicates the terminal device to transmit data by using the TBoMS; and
the sending unit is further configured to send a second message to the terminal device, and the second message is used to notify the terminal device of a value of N2.

**57.** The communication apparatus according to any one of claims 48 to 50, wherein the communication apparatus is a network device; and the communication apparatus further comprises a sending unit, wherein

the sending unit is configured to send a third message to a terminal device, and the third message comprises the value of N2; and
the value of N2 indicates that the terminal device transmits data by using the TBoMS.

**58.** The communication apparatus according to claim 56 or 57, wherein
the processing unit is specifically configured to determine the value of N1 based on a value of N2 and a value of N, wherein N1 meets: $N1 = N/N2$.

**59.** The communication apparatus according to claim 58, wherein
the sending unit is further configured to send a fourth message to the terminal device, and the fourth message indicates the value of N1.

**60.** A communication apparatus, comprising a processing unit, wherein

the processing unit is configured to determine a threshold; and
the processing unit is further configured to multiplex uplink control information UCI on a physical uplink shared channel PUSCH based on the threshold, wherein
the PUSCH occupies a plurality of slots, and a quantity of slots over which the processing unit multiplexes the UCI is greater than or equal to 2 and less than or equal to the threshold.

**61.** The communication apparatus according to claim 60, wherein

the threshold is a preset value; or
the threshold is indicated by a network device.

**62.** The communication apparatus according to claim 60 or 61, wherein the threshold is 4.

**63.** A communication apparatus, comprising: a processor and a memory, wherein the processor is coupled to the memory, the memory stores program instructions, and when the program instructions stored in the memory is executed by the processor, the method according to any one of claims 33 to 44 is performed.

**64.** A communication apparatus, comprising: a processor and a memory, wherein the processor is coupled to the memory, the memory stores program instructions, and when the program instructions stored in the memory is executed by the processor, the method according to any one of claims 45 to 47 is performed.

**65.** A chip, wherein the chip comprises a logic circuit and an input/output interface, the input/output interface is configured to communicate with a module outside the chip, and the logic circuit is configured to run a computer program or instructions, to control a communication device to perform the method according to any one of claims 1 to 16, or perform the method according to any one of claims 33 to 44, or perform the method according to any one of claims 45 to 47.

**66.** A computer-readable storage medium, wherein the computer-readable storage medium stores a program, and when the program is invoked by a processor, the method according to any one of claims 1 to 16, or the method according to any one of claims 33 to 44, or the method according to any one of claims 45 to 47 is performed.

Time domain symbol used for a first nominal repetition
Time domain symbol used for a second nominal repetition
Time domain symbol not used for a nominal repetition

FIG. 1a

Time domain symbol used for a first nominal repetition

Time domain symbol used for a second nominal repetition

Time domain symbol used for a third nominal repetition

Time domain symbol used for a fourth nominal repetition

Time domain symbol used for a first actual repetition included in the third nominal repetition

Time domain symbol used for a second actual repetition included in the third nominal repetition

Time domain symbol not used for a nominal repetition and an actual repetition

FIG. 1b

Time domain symbol used for a first
nominal repetition

Time domain symbol used for a first
actual repetition included in the first
nominal repetition

Time domain symbol used for a second
actual repetition included in the first
nominal repetition

Time domain symbol not used for a
nominal repetition and an actual repetition

FIG. 1c

LDPC-encoded bit
string

Actually transmitted
bit string

Untransmitted bit
string

RV0          RV1          RV2          RV3

FIG. 2

FIG. 3

400

| Terminal device | | Network device |
|---|---|---|

S401: Indication information 1

S409: Capability information 2

S402: Determine, based on the indication information, a resource of at least two actual repetitions included in a nominal repetition

S403: Use, as a first actual repetition, one of the at least two actual repetitions that meets a preset condition

S404: Expand a frequency domain resource unit corresponding to the first actual repetition, to obtain a target resource of the first actual repetition

S405: First actual repetition

FIG. 4

FIG. 5

FIG. 6

**700**

```
┌──────────────────┐                      ┌──────────────────┐
│  Terminal device │                      │  Network device  │
└────────┬─────────┘                      └────────┬─────────┘
         │   ┌──────────────────────────────────────────┐
         │   │ S701: Determine a resource of at least two actual │
         │   │    repetitions included in a nominal repetition   │
         │   └──────────────────────────────────────────┘
         │   ┌──────────────────────────────────────────┐
         │   │ S702: Use, as a first actual repetition, one of the at least │
         │   │   two actual repetitions that meets a preset condition       │
         │   └──────────────────────────────────────────┘
         │   ┌──────────────────────────────────────────┐
         │   │ S703: Expand a frequency domain resource unit │
         │   │ corresponding to the first actual repetition, to obtain a │
         │   │    target resource of the first actual repetition         │
         │   └──────────────────────────────────────────┘
         │◄────────── S704: Indication information 2 ───────────│
         │◄────────────── First actual repetition ─────────────►│
```

FIG. 7

One TB

| | PUSCH | |
|---|---|---|
| slot1 | slot2 | slot3 |

FIG. 8a

One TB

| PUSCH |
|---|
| slot2 |

FIG. 8b

| One TB | One TB | One TB |
|---|---|---|
| PUSCH | PUSCH | PUSCH |
| slot1 | slot2 | slot3 |

FIG. 8c

When data is transmitted by using a TBoMS, a communication device determines a value of N1 ⟋ S901

The communication device performs a repeated transmission of the data based on the value of N1 ⟋ S902

FIG. 9

N1+X

| PDSCH | ←→ | PUCCH |

slot1

N2+Y

| PDCCH | ←→ | PUSCH | PUSCH |

slot1   slot2

FIG. 10

N1+X

| PDSCH | ←→ | PUCCH |

slot1

N2+Y

| PDCCH | ←→ | | PUSCH | |

slot1   slot2   slot3

| UCI | | UCI | | UCI | |

slot1   slot2   slot3

FIG. 11

A terminal device determines a threshold — S1201

The terminal device multiplexes UCI on a PUSCH based on the threshold — S1202

FIG. 12

N1+X

PDSCH ◄──────────► PUCCH

slot3

N2+Y

PDCCH ◄──────────► | | | PUSCH | | | | | |

slot1  slot2  slot3  slot4  slot5  slot6  slot7  slot8

| | | UCI | UCI | UCI | UCI | | |

slot1  slot2  slot3  slot4  slot5  slot6  slot7  slot8

FIG. 13

N1+X

PDSCH ◄──────────► PUCCH

slot3

N2+Y

PDCCH ◄──────────► | | | PUSCH | | | | | |

slot1  slot2  slot3  slot4  slot5  slot6  slot7  slot8

| | | UCI | | UCI | UCI | UCI | |

slot1  slot2  slot3  slot4  slot5  slot6  slot7  slot8

FIG. 14

N1+X

PDSCH ←————————————→ PUCCH

slot3

N2+Y

PDCCH ←————————————→ | | | PUSCH | | | | | |

slot1  slot2  slot3  slot4  slot5  slot6  slot7  slot8

| | | UCI | UCI | | UCI | UCI | |

slot1  slot2  slot3  slot4  slot5  slot6  slot7  slot8

FIG. 15

N1+X

PDSCH ←————————————→ PUCCH

slot3

N2+Y

PDCCH ←————————————→ | | | PUSCH | | | | | |

slot1  slot2  slot3  slot4  slot5  slot6  slot7  slot8

| | | | UCI | UCI | UCI | UCI | |

slot1  slot2  slot3  slot4  slot5  slot6  slot7  slot8

FIG. 16

Communication apparatus **1700**

Sending unit **1703**

Receiving unit **1704** — Processing unit **1702**

Storage unit **1701**

FIG. 17

1800

Communication apparatus

1803

Transceiver

1802

Processor

1804

1801

Memory

FIG. 18

## INTERNATIONAL SEARCH REPORT

| International application No. |
|---|
| **PCT/CN2021/085748** |

**A. CLASSIFICATION OF SUBJECT MATTER**

H04W 72/04(2009.01)i

According to International Patent Classification (IPC) or to both national classification and IPC

**B. FIELDS SEARCHED**

Minimum documentation searched (classification system followed by classification symbols)

H04W; H04L; H04B

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; 3GPP: 名义重复, 实际重复, 频域, 资源, 资源块, 资源单元, 高, 码率, 增加, 额外, 补偿, 更多, 传输块, 多时隙, 最大, 最多, 少于, 限制, 次数, 时隙, 上行控制信息, 复用, 承载, 携带, 物理上行共享信道, nominal, actual, repetition, frequency, domain, resource, RB, RE, high, rate, increas+, addition+, compensat+, more, TB, multi-slot, TBoMS, maximum, no?, more, than, less, limit, constraint+, number?, count?, slot?, multiplex+, piggyback+, pusch

**C. DOCUMENTS CONSIDERED TO BE RELEVANT**

| Category* | Citation of document, with indication, where appropriate, of the relevant passages | Relevant to claim No. |
|---|---|---|
| X | WO 2020146672 A1 (QUALCOMM INC) 16 July 2020 (2020-07-16) description, paragraphs [00100], [00107]-[00109], and [00140]-[00146] | 1-7, 9-11, 16-23, 25-27, 32, 65, 66 |
| X | SHARP. "FL Summary on Enhancements on PUSCH repetition type A" *3GPP TSG RAN WG1 #104-e, R1-2102113*, 05 February 2021 (2021-02-05), section 2.1 | 33-44, 48-59, 63, 65, 66 |
| X | CN 112106316 A (WILUS INSTITUTE OF STANDARDS AND TECHNOLOGY INC.) 18 December 2020 (2020-12-18) description, paragraphs [0153] and [0175]-[0176] | 45-47, 60-62, 64-66 |
| A | CN 110611958 A (ZTE CORPORATION) 24 December 2019 (2019-12-24) entire document | 1-32, 65, 66 |
| A | CN 111953466 A (ZTE CORPORATION) 17 November 2020 (2020-11-17) entire document | 33-44, 48-59, 63, 65, 66 |
| A | WO 2018203650 A1 (LG ELECTRONICS INC.) 08 November 2018 (2018-11-08) entire document | 33-44, 48-59, 63, 65, 66 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 August 2021** | **20 October 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2021/085748** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 112106319 A (QUALCOMM INC.) 18 December 2020 (2020-12-18)<br>     entire document | 33-44, 48-59, 63, 65, 66 |
| A | ZTE. "PUSCH enhancements for NR URLLC"<br>*3GPP TSG RAN WG1 #97, R1-1906411*, 03 May 2019 (2019-05-03),<br>     sections 2.2 and 4.2 | 1-32, 65, 66 |
| A | CATT. "Remaining issues on PUSCH enhancements"<br>*3GPP TSG RAN WG1 #100bis, R1-2002084*, 11 April 2020 (2020-04-11),<br>     sections 2.1, 4.1 and 4.2 | 1-32, 65, 66 |
| A | SIERRA WIRELESS. "Design Considerations for TB Processing over Multi-Slot PUSCH"<br>*3GPP TSG RAN WG1 #104-e, R1-2101328*, 19 January 2021 (2021-01-19),<br>     section 4 | 33-44, 48-59, 63, 65, 66 |
| A | ASUSTEK. "Discussion on multiplexing UCI of same type on a PUSCH"<br>*3GPP TSG RAN WG1 Meeting #100b, R1-2002403*, 10 April 2020 (2020-04-10),<br>     section 2 | 45-47, 60-62, 64-66 |

Form PCT/ISA/210 (second sheet) (January 2015)

**INTERNATIONAL SEARCH REPORT**

International application No.

**PCT/CN2021/085748**

| Box No. III | Observations where unity of invention is lacking (Continuation of item 3 of first sheet) |
| --- | --- |

This International Searching Authority found multiple inventions in this international application, as follows:

[1]  Independent claims 1, 17, 32, and 65-66 (when referring to claim 1) and independent claims 33, 48, 63, and 65-66 (when referring to claim 33) as well as independent claims 45, 60, 64, and 65-66 (when referring to claim 45) do not share a same or corresponding special technical feature, and therefore, said claims lack unity, and does not comply with PCT Rule 13.1.

1. ☐  As all required additional search fees were timely paid by the applicant, this international search report covers all searchable claims.

2. ☑  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on Protest**     ☐  The additional search fees were accompanied by the applicant's protest and, where applicable, the payment of a protest fee.

☐  The additional search fees were accompanied by the applicant's protest but the applicable protest fee was not paid within the time limit specified in the invitation.

☐  No protest accompanied the payment of additional search fees.

Form PCT/ISA/210 (continuation of first sheet) (January 2015)

**INTERNATIONAL SEARCH REPORT**
**Information on patent family members**

International application No.

**PCT/CN2021/085748**

| Patent document cited in search report | | | Publication date (day/month/year) | Patent family member(s) | | | Publication date (day/month/year) |
|---|---|---|---|---|---|---|---|
| WO | 2020146672 | A1 | 16 July 2020 | US | 2020221478 | A1 | 09 July 2020 |
| CN | 112106316 | A | 18 December 2020 | WO | 2019216729 | A1 | 14 November 2019 |
| | | | | KR | 20200142526 | A | 22 December 2020 |
| | | | | EP | 3793114 | A1 | 17 March 2021 |
| | | | | VN | 76669 | A | 25 March 2021 |
| | | | | US | 2021092762 | A1 | 25 March 2021 |
| CN | 110611958 | A | 24 December 2019 | WO | 2021031804 | A1 | 25 February 2021 |
| CN | 111953466 | A | 17 November 2020 | | None | | |
| WO | 2018203650 | A1 | 08 November 2018 | US | 10951377 | B2 | 16 March 2021 |
| | | | | US | 2020067676 | A1 | 27 February 2020 |
| | | | | EP | 3606235 | A1 | 05 February 2020 |
| | | | | KR | 20190133042 | A | 29 November 2019 |
| | | | | EP | 3606235 | A4 | 11 March 2020 |
| | | | | CN | 110651522 | A | 03 January 2020 |
| | | | | KR | 102234254 | B1 | 31 March 2021 |
| | | | | JP | 6883118 | B2 | 09 June 2021 |
| | | | | JP | 2020519158 | W | 25 June 2020 |
| CN | 112106319 | A | 18 December 2020 | WO | 2019217827 | A1 | 14 November 2019 |
| | | | | EP | 3791522 | A1 | 17 March 2021 |
| | | | | US | 2019349917 | A1 | 14 November 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2021076004 W